# EUROPEAN PATENT APPLICATION

(11) **EP 3 854 475 A1**
(43) Date of publication of application: **28.07.2021**
(21) Application number: 20153349.4
(22) Date of filing: 23.01.2020
(51) Int. Cl.: B01J 20/22, B01J 20/28, B01J 20/30, B01J 20/34, B01D 53/04, C02F 1/28, B01D 53/26, E03B 3/28

(54) **IMPROVEMENTS RELATED TO SORBENT MEDIA**

(71) Applicant: Molecule RND Limited, Castleroy, Limerick (IE)
(72) Inventor: FRANCIS, Kurt, Limerick (IE)
(74) Representative: Appleyard Lees IP LLP

(57) **Abstract**

A sorbent pellet comprising a sorbent material. The sorbent pellet is suitable for use in a sorbent rotor device, for example to capture water or water vapour from a gaseous or liquid composition comprising water or water vapour. The sorbent material has a unit cell density of at least 0.8 g/cm³ and may therefore be considered to be a high density sorbent material. A plurality of sorbent pellets may provide a high capacity media for a sorbent rotor device, which may be particularly effective in dehumidification, desalination or water purification processes. Also disclosed are a cartridge for a sorbent rotor device, a sorbent rotor device for capturing water from a liquid or gaseous composition comprising water, a method of capturing water from a composition comprising water and/or water vapour, and a use of a sorbent material having a density of at least 0.8 g/cm³ in pellet form to capture water from air.

## Description

### Field

The present invention relates to a sorbent material and to a sorbent rotor device comprising a sorbent material. In particular, the invention relates to a sorbent pellet comprising a sorbent material and to a cartridge for a sorbent rotor device comprising a plurality of pellets of a sorbent material. The invention also relates to the use of the plurality of pellets in gas separation and capture processes, in particular water capture and dehumidification processes.

### Background

Dehumidification is a process in which moisture or water vapour is removed from air. An excess of moisture in the air can lead to building and property damage, as well as being a health concern for those using buildings with overly humid air. Such dehumidification processes can be carried out in enclosed environments by heating, ventilation and air conditioning (HVAC) systems. However, such HVAC systems use substantial amounts of energy in performing dehumidification which contributes significantly to the overall energy consumption and hence environmental impact of a building. Therefore even a small reduction in energy consumption of a HVAC system can be highly beneficial in reducing the running costs and environmental impact of a building. Providing more efficient and inexpensive dehumidification methods would therefore be beneficial.

There are two common methods of dehumidification. The first uses cooling and condensation, and the second takes advantage of desiccant materials to absorb or adsorb water from the air to dry the air to the required relative humidity. The second method may be used without any significant cooling, which means that methods using desiccants can achieve a very low relative humidity (or dew point) which may be necessary in certain situations, such as in the pharmaceutical and/or food processing industries.

Most desiccant dehumidifiers comprise a rotor (or wheel) comprising a sorbent material. Air is blown through the rotor and the humidity in the air is absorbed or adsorbed by the sorbent material incorporated within the rotor structure. The industry standard is to impregnate the desiccant into a honeycomb or corrugated substrate that forms the rotor structure. The substrate is most commonly a form of paper, cellulose or an epoxy/fibreglass matrix. Though this device is most commonly used to capture water vapour from air, other gases can also be captured depending on the type of sorbent material being used. Such sorbent rotor devices may also find utility in liquid purification processes.

The rotor has been developed for commonly known sorbent material, for example silica gel, activated alumina and molecular sieves such as zeolites. These sorbent materials are generally arranged in thin layers on the substrate in order to maximise surface area of the sorbent material to provide a sufficiently effective water capture process for practical purposes. This means that the overall amount of sorbent material which can be incorporated into a sorbent rotor device of a given size is limited.

### Summary of the Invention

It is one aim of the present invention, amongst others, to provide a sorbent pellet, a method of producing a sorbent pellet, a cartridge for a sorbent rotor device, a sorbent rotor device, a method of capturing water from a composition comprising water and/or water vapour and a use of a sorbent material in pellet form to capture water from air that addresses at least one disadvantage of the prior art, whether identified here or elsewhere, or to provide an alternative to existing sorbent rotor. For instance it may be an aim of the present invention to provide a sorbent pellet which can be used in sorbent rotor device to provide improved performance in water or water vapour capture processes, such as dehumidification, water purification or desalination.

According to aspects of the present invention, there is provided a sorbent pellet, a cartridge for a sorbent rotor device, a sorbent rotor device, methods and a use as set forth in the appended claims. Other features of the invention will be apparent from the dependent claims, and the description which follows.

According to a first aspect of the present invention, there is provided a sorbent pellet comprising a sorbent material, wherein the sorbent material has a unit cell density of at least 0.8 g/cm³.

The present inventors have identified that known sorbent materials such as silica gel, activated alumina and molecular sieves such as zeolites, have a low unit cell density (or crystal density), i.e. of less than 0.7 g/cm³, which limits their use in a sorbent rotor device to embodiments wherein said sorbent materials are thinly spread on substrates to achieve acceptable sorption profiles, which limits the overall performance potential of the sorbent rotor device. For example, a known cartridge for a sorbent rotor device having a corrugated substrate and a common sorbent material arranged thereon, may only hold approximately 2 kg of sorbent material. The inventors have found that sorbent materials with a relatively high unit cell density, i.e. greater than 0.8 g/cm³, can be formed into pellets which can then be packed into a sorbent rotor cartridge to provide a higher density of sorbent material in the cartridge than would otherwise be possible with known cartridges of sorbent material. For example, a cartridge of the same size as the cartridge comprising 2 kg of sorbent material discussed above, containing sorbent pellets of this first aspect may comprise approximately 10 kg of the sorbent material having a high unit cell density. This makes it possible to improve the overall performance of the sorbent rotor device, without changing the design of the sorbent rotor device. Suitably the sorbent material of the sorbent pellet also has fast kinetics as well as high unit cell density, in order for the performance of the sorbent material not to be adversely affected by the pelletization and relatively high density packing into a sorbent rotor cartridge.

The sorbent pellets may be particularly advantageous in relation to water capture devices, for example in HVAC systems for dehumidification. However the arrangement of the sorbent materials within the sorbent rotor cartridge may be used in a variety of applications, including the capture of water from liquid compositions comprising water, for example in desalination processes.

The sorbent materials used in the sorbent pellets of this first aspect typically comprise pores or cavities within their crystal structure. Therefore these sorbent materials they may also be described as being porous materials. Water and other small molecules can enter into the pores and be held within the pores by intermolecular interactions, for example by van der Waals forces. This may be considered a process of absorbing water into the bulk of the sorbent material. In another sense, this may be considered to be a process of adsorbing the water molecules onto a surface of the sorbent material, whether that be the outer surface of the material or the inner surface of the pores comprised within the crystal structure of the sorbent material. These materials are considered to mainly function by taking water into the pores in their crystal structure. The terms "sorbent" and "sorbing" are therefore used herein to describe this process which may be considered to be either adsorbing or absorbing.

Sorbent materials are usually synthesised as a powder and thus the unit cell density (or crystal density) may be determined by analysis of a crystal structure obtained by powder X-ray diffraction. For example, the unit cell dimensions of a crystal may be provided in a crystallographic information file (CIF) obtained by a known powder X-ray diffraction technique and the unit cell density may then be calculated using techniques known in the art. In the present invention, sorbent materials with a unit cell density of greater than 0.8 g/cm³ are considered to be high unit cell density materials. Sorbent materials with a unit cell density of less than 0.7 g/cm³ are considered to be low density materials.

### The sorbent material

The sorbent material of the sorbent pellets has a unit cell density of greater than 0.8 g/cm³. Therefore the sorbent material is suitably a crystalline material. The unit cell density of a given crystal is the ratio of the mass of unit cell to the volume of the unit cell. The inventors have found that the unit cell density of such crystalline sorbent materials can be used to classify such sorbent materials as high or low density, as an indicator of whether said materials may be suitable for forming into sorbent pellets.

Suitably the sorbent material has a unit cell density of at least 0.9 g/cm³, suitably at least 1.0 g/cm³ or at least 1.1 g/cm³, for example at least 1.2 g/cm³. The sorbent material can suitably be classified as a high density sorbent material.

In some embodiments the sorbent material is a metal-organic material.

Metal-organic materials (or MOMs) is a term used to describe materials comprising metal moieties and organic ligands including a diverse group of discrete (e.g. metal-organic polyhedra, spheres or nanoballs or metal-organic polygons) or polymeric structures (e.g. porous coordination polymers (PCPs), metal-organic frameworks (MOFs) or hybrid inorganic-organic materials). The term metal-organic material is therefore considered to encompass discrete as well as extended structures with periodicity in one, two, or three dimensions.

The metal-organic materials of the present invention suitably comprise metal species and ligands. In some embodiments these may be linked in substantially two-dimensions with weaker forces between two-dimensional layers. In some embodiments the metal species and ligands are linked in three dimensions to provide a metal-organic framework material or MOF.

The term metal species as used herein may refer to a metal cation or metal cluster that serves as a node in a metal-organic species.

Some preferred metal species for use herein are d-block metals, for example transition metal species. These are suitably present as transition metal ions. Other metal species that may be useful herein are magnesium, calcium and aluminium.

In especially preferred embodiments the metal species is selected from copper, cobalt, nickel, iron, zinc, cadmium, zirconium, magnesium, calcium and aluminium.

Most preferably the metal species is selected from Cu²⁺, Co²⁺, Ni²⁺, Fe²⁺, Fe³⁺, Zn²⁺, Cd²⁺, Zr⁴⁺, Mg²⁺, Ca²⁺ and Al³⁺.

In some embodiments the metal-organic material may comprise a mixture of two or more metal species. In preferred embodiments all of the metal species in the metal-organic material are the same.

The metal-organic materials defined herein suitably comprise ligands. Unless otherwise specified, the term ligands refers to linker ligands which provide a link between two or more metal species. Suitably the ligand is a multidentate ligand.

The metal-organic material may comprise a mixture of two or more different ligands. Preferably all of the ligands in the metal-organic material are the same.

In preferred embodiments the ligand is a bidentate ligand.

In especially preferred embodiments the ligand is an organic bidentate ligand.

Suitable organic bidentate ligands may be aliphatic or aromatic in character.

Bidentate ligands suitably include at least two donor atoms. These are atoms that are able to donate an electron pair to form a coordinate bond, suitably a coordinate covalent bond.

In the organic bidentate ligands used in the present invention, the two donor atoms may be selected from halogens, sulphur, oxygen and nitrogen. The two donor atoms may each be the same or different.

Suitably the donor atoms are selected from oxygen and nitrogen.

Preferred ligands for use herein are compounds including one or more nitrogen atoms and/or one or more carboxylic acid (COOH) groups. When incorporated into the metal-organic material carboxylic acid groups typically bind to a metal species as a carboxylate anion.

Preferred ligands for use herein are compounds including one or more aromatic nitrogen atoms and/or one or more carboxylic acid groups.

In some preferred embodiments the metal-organic material comprises an organic bidentate ligand having two donor nitrogen atoms. These may be referred to herein as bidentate nitrogen ligands.

Preferred bidentate nitrogen ligands comprise at least one nitrogen-containing heterocycle. In some embodiments the bidentate nitrogen ligand may be a nitrogen-containing heterocycle comprising two nitrogen atoms each having a lone pair of electrons, for example pyrazine. The bidentate ligand may comprise multiple aromatic rings including multiple nitrogen containing aromatic heterocycles, which may contain one or more nitrogen atoms and optionally one or more further heteroatoms. For example these may include aromatic moieties based on pyridine, pyrazine, imidazole, pyrimidine, pyrrole, pyrazole, isoxazole and oxazole. Also suitable are compounds based on bicyclic aromatic heterocycles, for example indole, purine, isoindole, pteridine, quinoline, benzotriazole and isoquinoline.

Nitrogen containing aromatic heterocyclic ligands may be incorporated into the metal-organic material in protonated or deprotonated form.

In some embodiments the bidentate nitrogen ligand comprises two nitrogen-containing heterocycles, which may be linked by a bond. One such preferred bidentate ligand is 4,4'-bipyridine (L1):

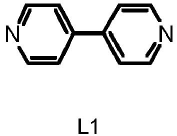

Alternatively, the two nitrogen-containing heterocycles may be linked together by a spacer group. Suitably the bidentate nitrogen ligand has the formula (L2N): 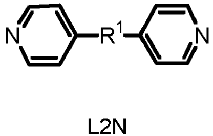
wherein R¹ is an optionally substituted spacer group.
R¹ may be a heteroatom, a group of connected heteroatoms or a group comprising heteroatoms. For example R¹ may be a -N=N- group.
R¹ may be a hydrocarbyl group. The hydrocarbyl group may comprise a cyclic group. The hydrocarbyl group may comprise an aromatic cyclic group. The hydrocarbyl group may comprise a heterocyclic group.

As used herein, the term "hydrocarbyl" is used in its ordinary sense, which is well-known to those skilled in the art. Specifically, it refers to a group having predominantly hydrocarbon character. Examples of hydrocarbyl groups include:
(i) hydrocarbon groups, that is, aliphatic (which may be saturated or unsaturated, linear or branched, e.g., alkyl or alkenyl), alicyclic (e.g., cycloalkyl, cycloalkenyl) substituents, and aromatic-, aliphatic-, and alicyclic-substituted aromatic substituents, as well as cyclic substituents wherein the ring is completed through another portion of the molecule (e.g., two substituents together form a ring);
(ii) substituted hydrocarbon groups, that is, substituents containing non-hydrocarbon groups which, in the context of this invention, do not alter the predominantly hydrocarbon nature of the substituent (e.g., halo (especially chloro and fluoro), hydroxy, alkoxy, keto, acyl, cyano, mercapto, alkylmercapto, amino, alkylamino, nitro, nitroso, and sulphoxy);
(iii) hetero substituents, that is, substituents which, while having a predominantly hydrocarbon character, in the context of this invention, contain other than carbon in a ring or chain otherwise composed of carbon atoms. Heteroatoms include sulphur, oxygen, nitrogen and encompass substituents such as pyridyl, furyl, thienyl and imidazolyl.

R¹ is suitably a C₁₋₄ hydrocarbyl group.

Suitable bidentate nitrogen ligands for use herein include compounds L1 to L68:

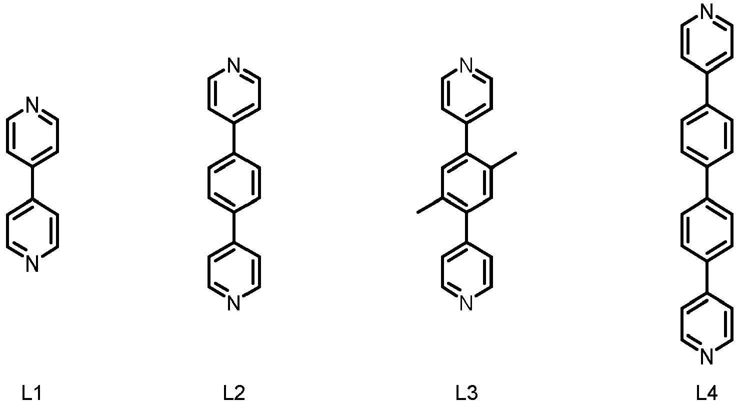

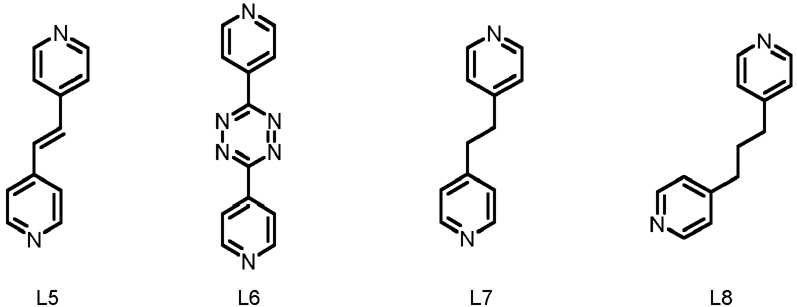

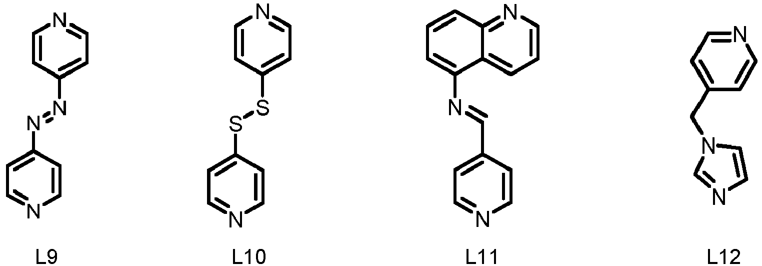

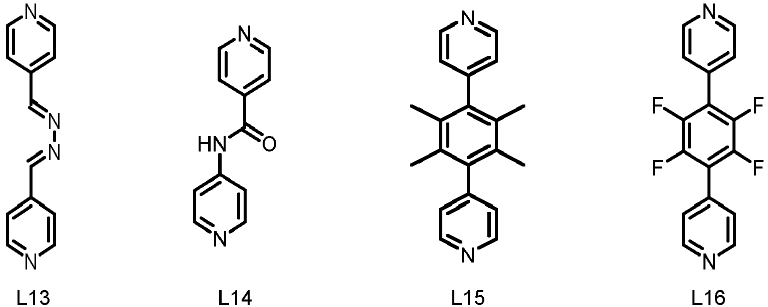

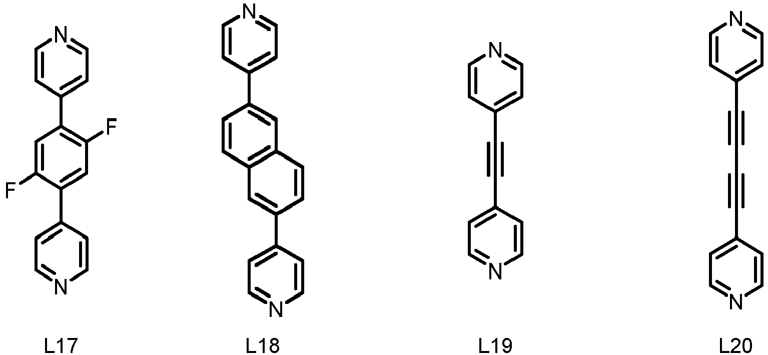

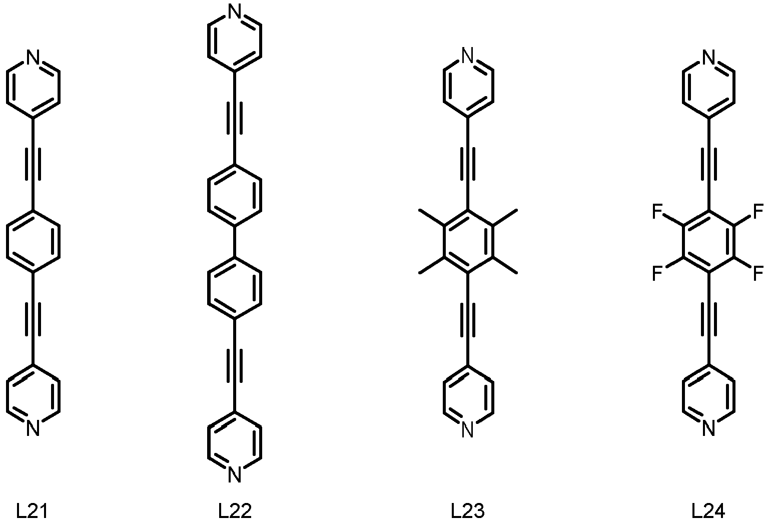

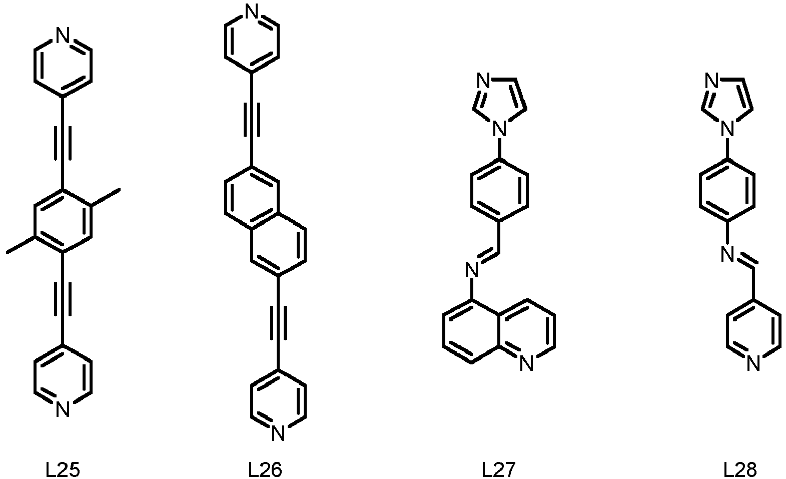

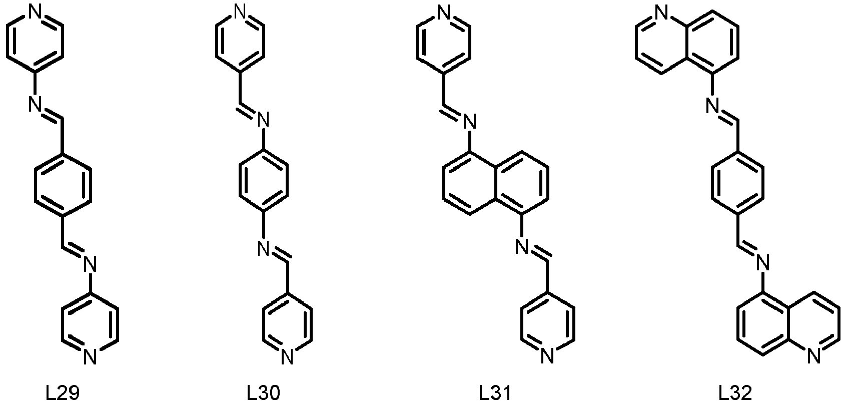

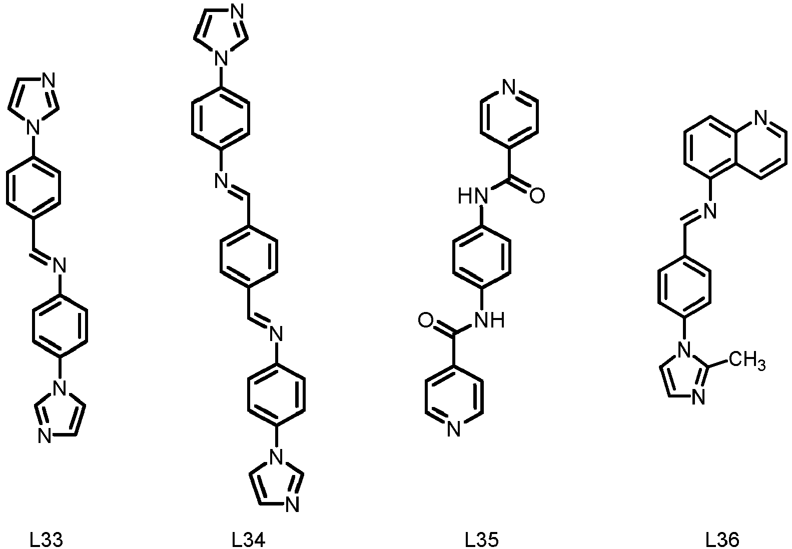

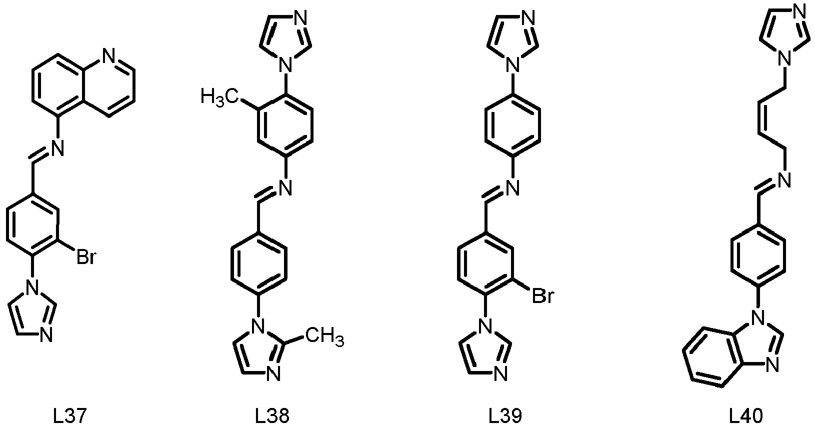

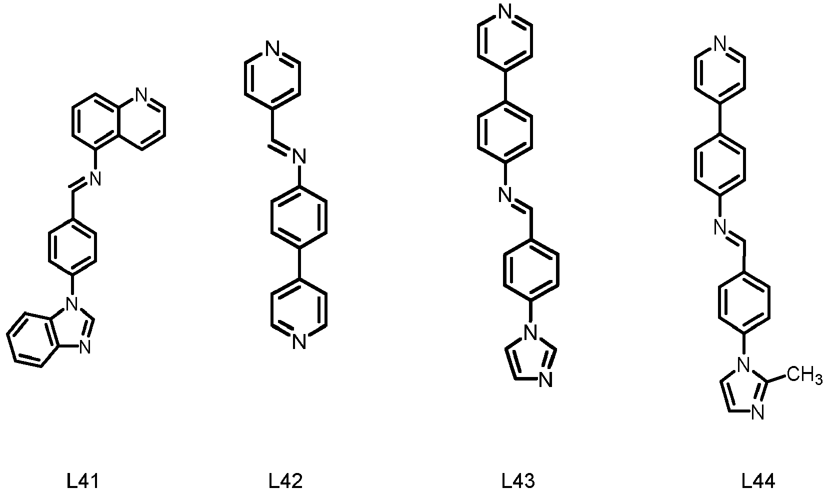

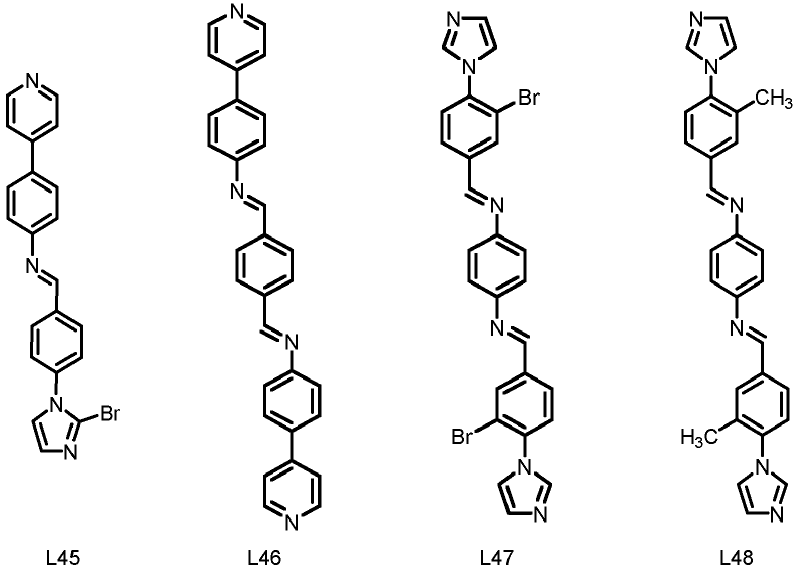

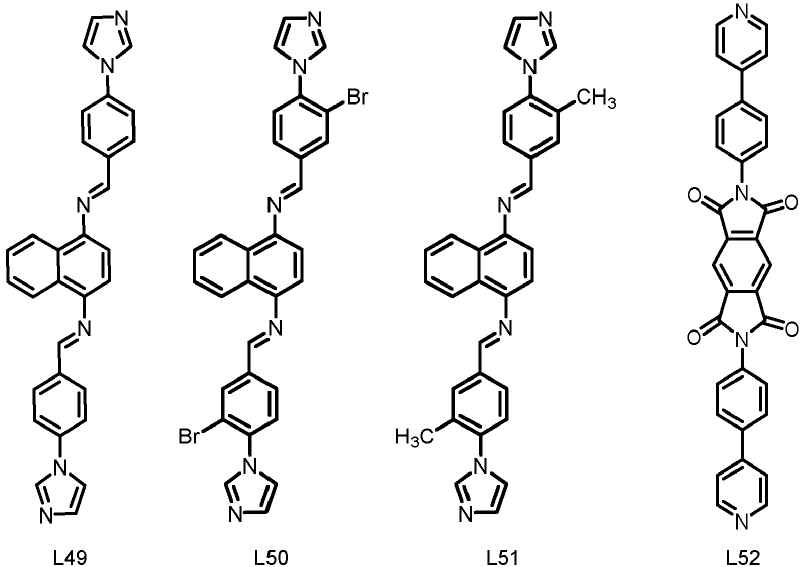

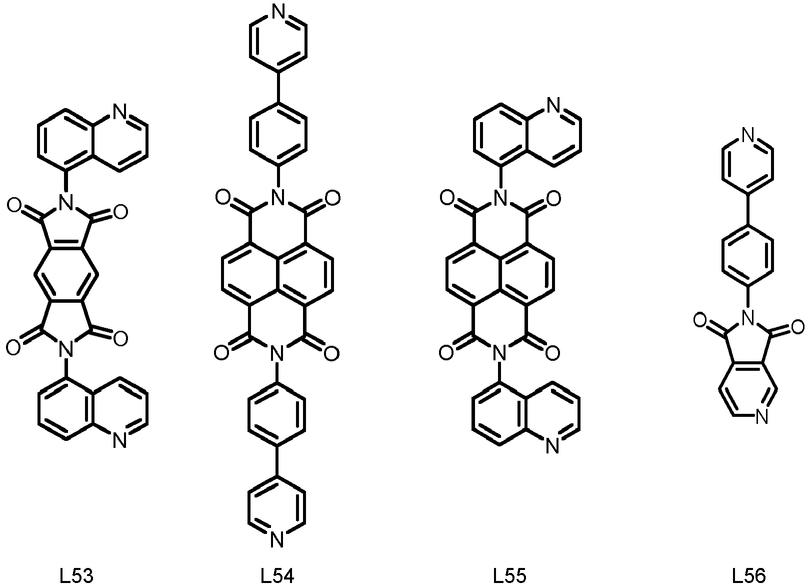

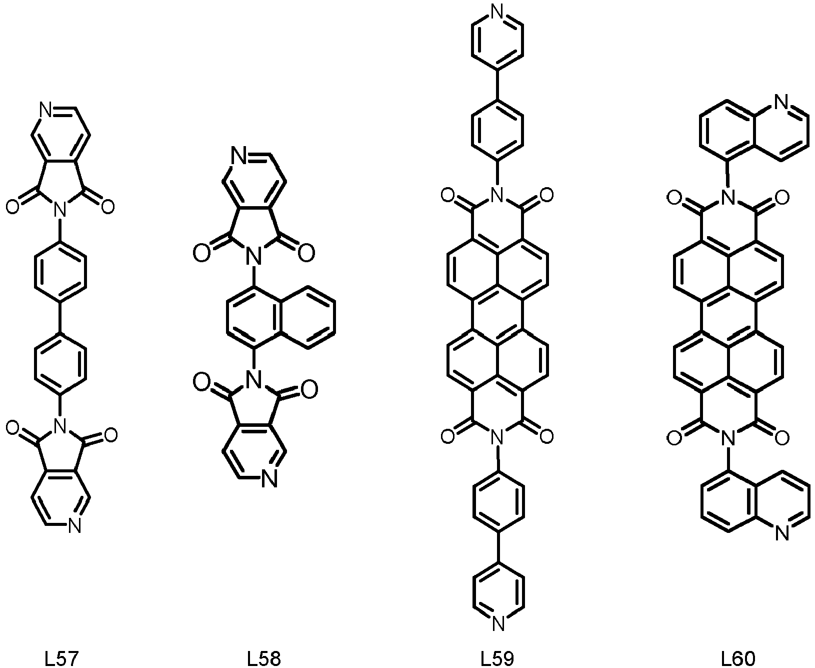

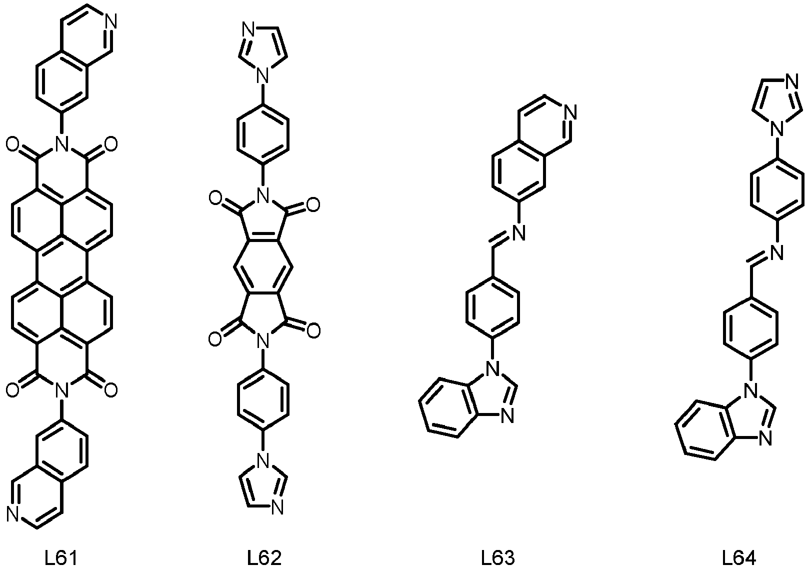

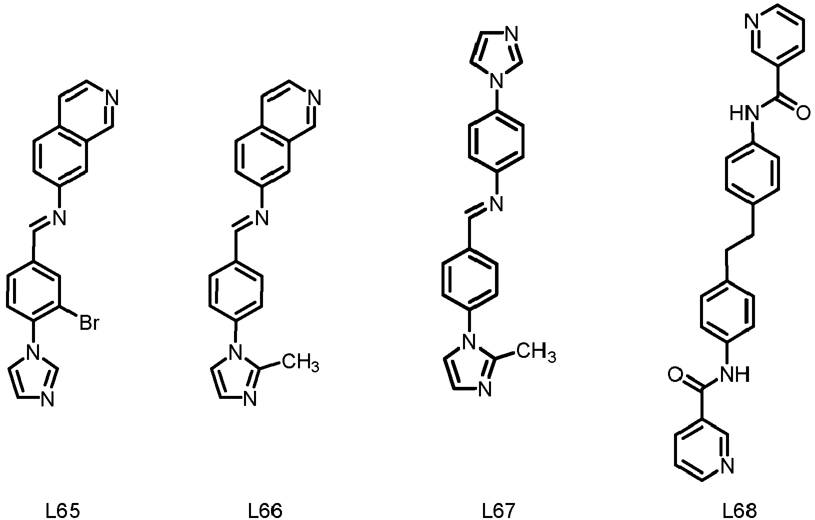

Preferred bidentate ligands for use herein include compounds (L1) to (L10) listed above.

Preferred bidentate nitrogen ligands for use herein include 4,4'-bipyridine (L1), 1,4-bis(4-pyridyl)benzene (L2), 4,4'-(2,5-dimethyl-1,4-phenylene)dipyridine (L3), 1,4-bis(4-pyridyl)biphenyl (L4) and 1,2-di(pyridine-4-yl)-ethene (L5).

Especially preferred bidentate nitrogen ligands for use herein include 4,4'-bipyridine (L1), 1,4-bis(4-pyridyl)benzene (L2), 4,4'-(2,5-dimethyl-1,4-phenylene)dipyridine (L3) and 1,4-bis(4-pyridyl)biphenyl (L4).

Most preferably the bidentate nitrogen ligand is 4,4'-bipyridine (L1) or 1,4-bis(4-pyridyl)biphenyl (L4).

In some preferred embodiments the metal-organic material comprises an organic multidentate ligand having at least one donor nitrogen atom and one or more carboxylic acid residues. Preferred compounds of this type include at least one nitrogen containing aromatic ring. Such compounds may be referred to herein as nitrogen-carboxylate ligands.

Other suitable compounds of this type include those based on other nitrogen containing aromatic heterocycles, which may contain one or more nitrogen atoms and optionally one or more further heteroatoms, for example, imidazole, pyrimidine, pyrrole, pyrazole, isoxazole and oxazole. Also suitable are compounds based on bicyclic aromatic heterocycles, for example indole, purine, isoindole, pteridine, quinoline, benzotriazole and isoquinoline.

Suitable nitrogen-carboxylate ligands include compounds of formula L69 to L128:

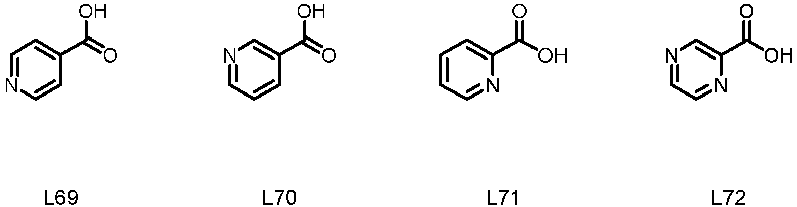

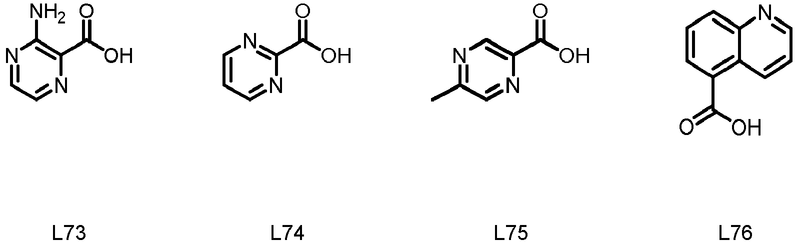

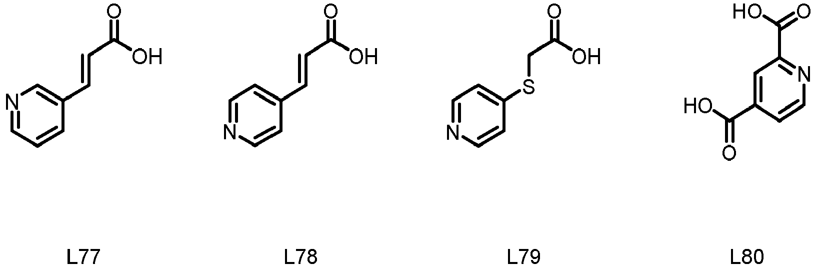

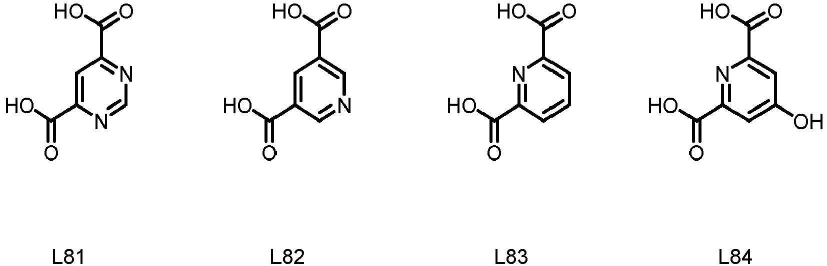

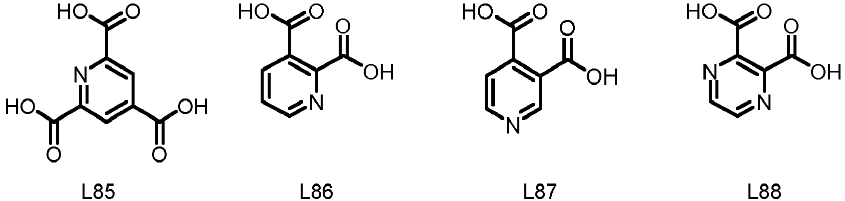

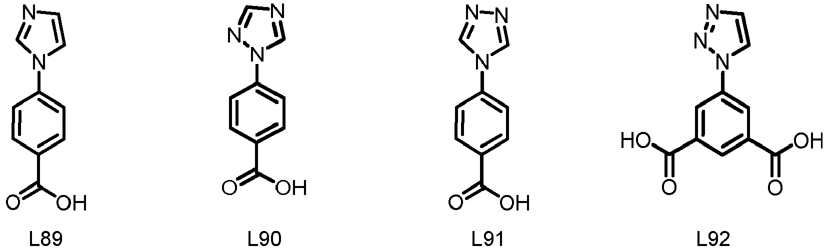

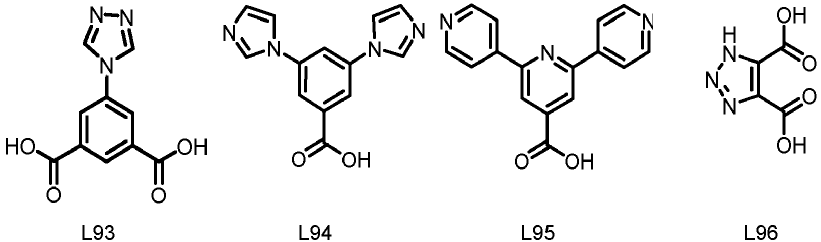

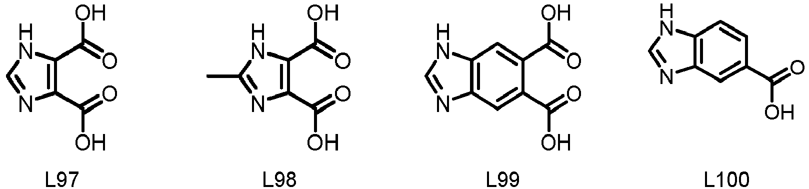

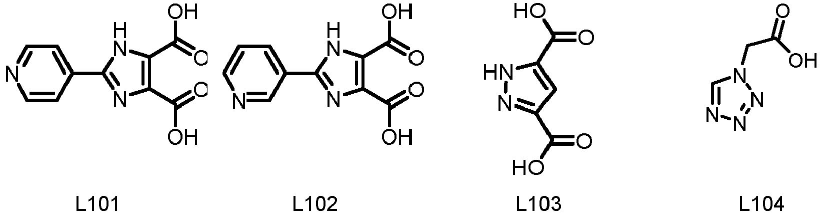

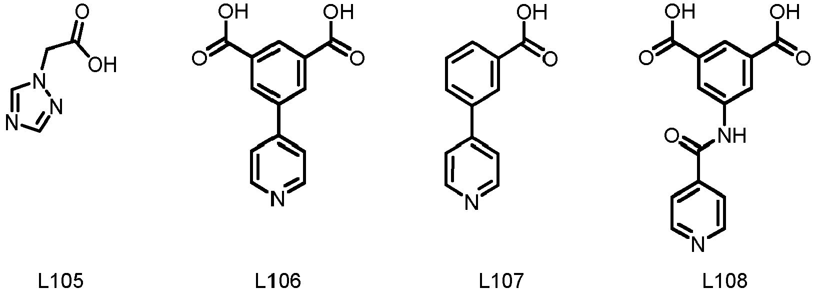

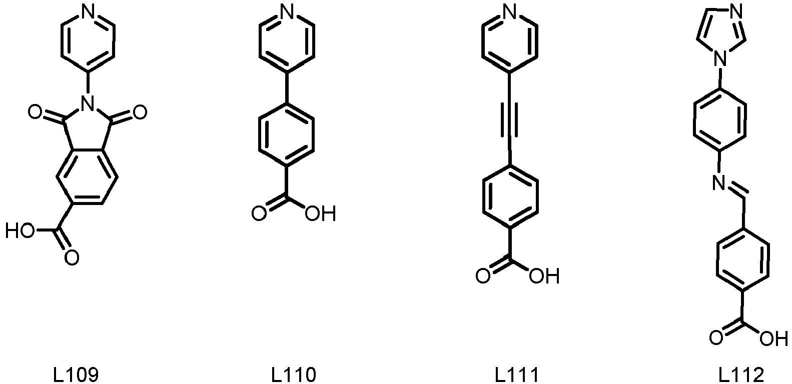

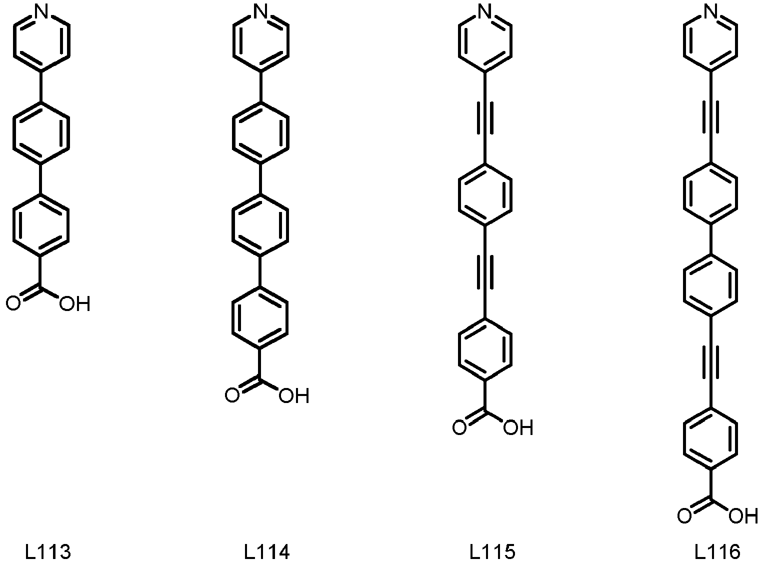

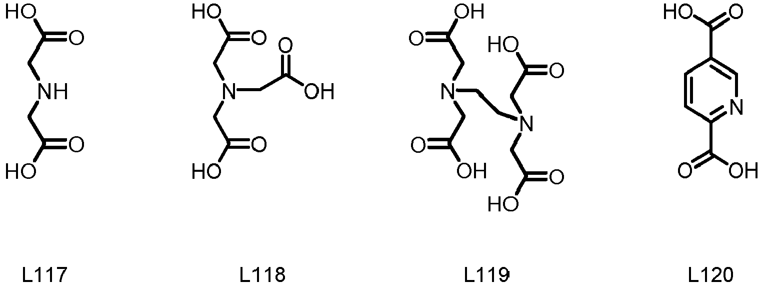

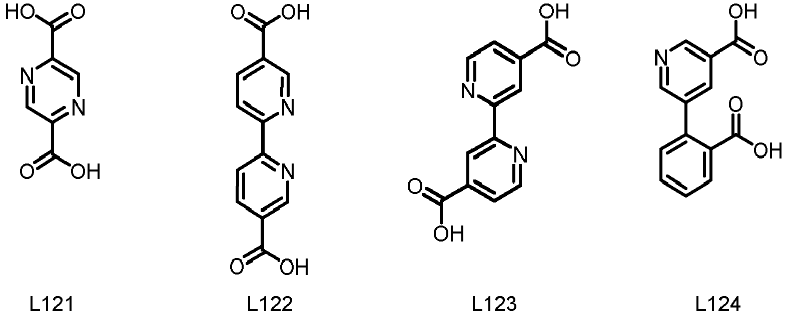

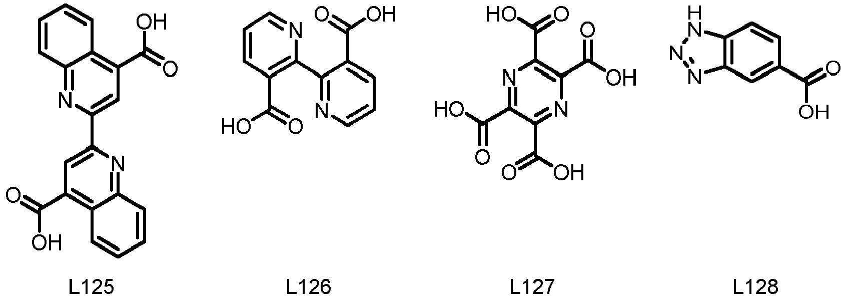

Preferred ligands of this type include benzotriazole-5-carboxylic acid (L128) and 2,4-pyridinedicarboxylic acid (L80).

In some preferred embodiments the metal-organic material comprises an organic multidentate ligand having at least two carboxylic acid residues. These compounds may be referred to herein as polycarboxylate ligands.

Suitable polycarboxylate ligands include compounds of formula L129 to L198:

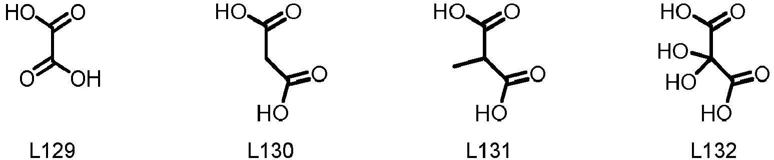

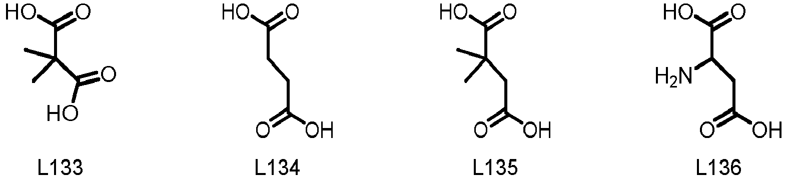

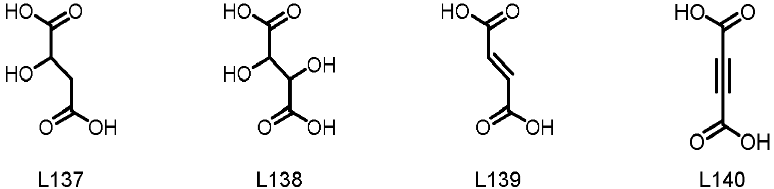

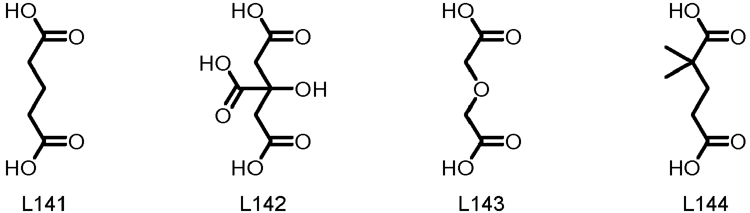

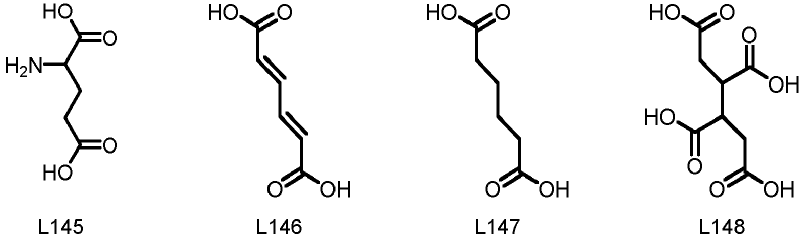

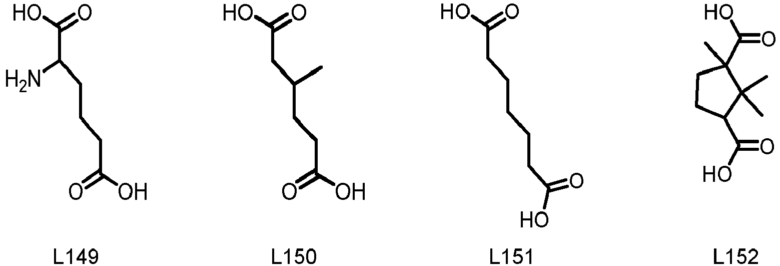

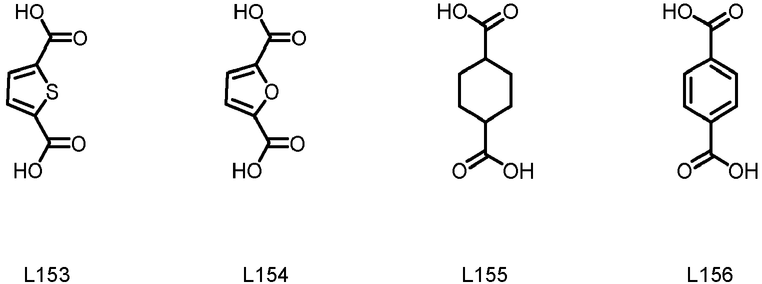

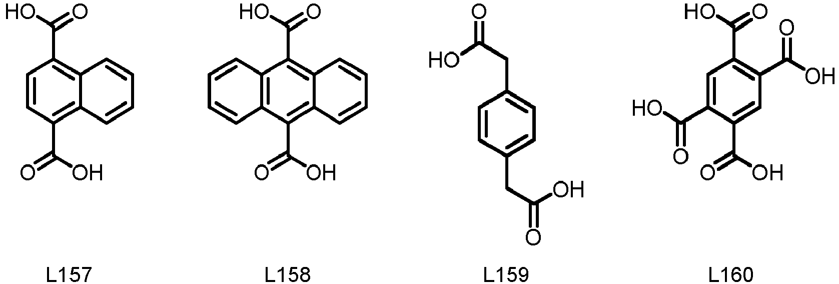

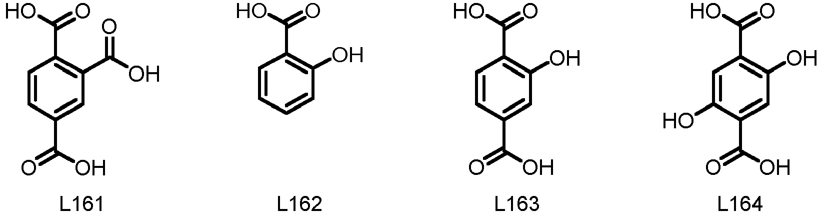

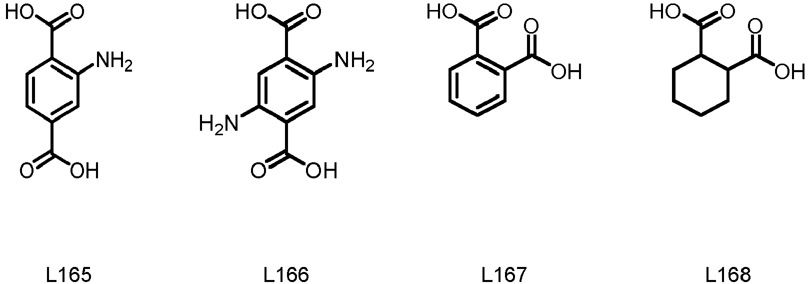

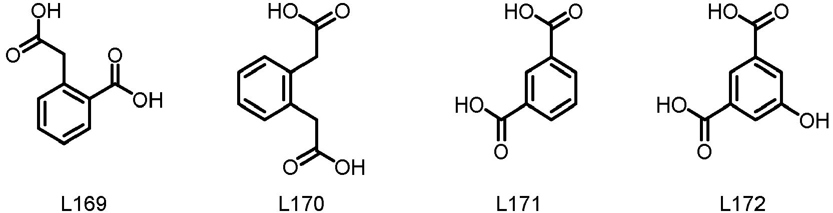

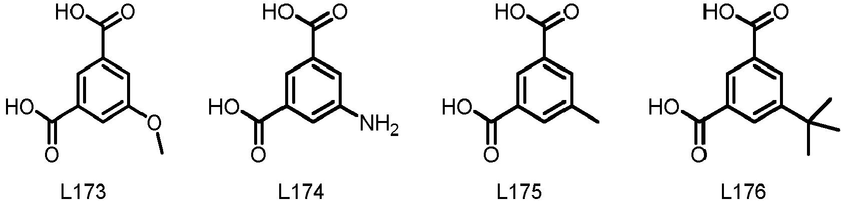

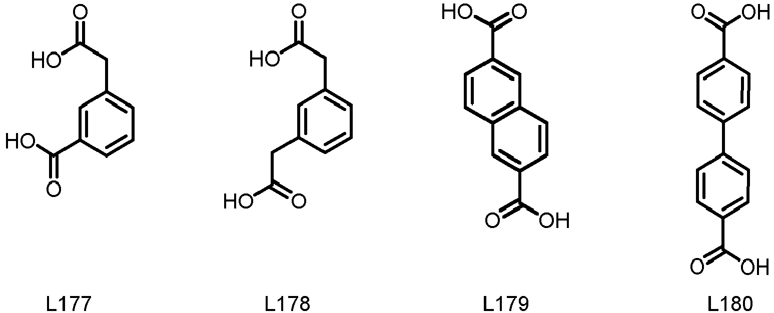

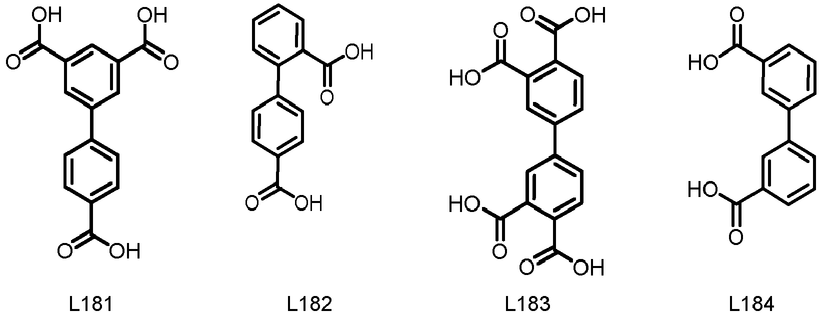

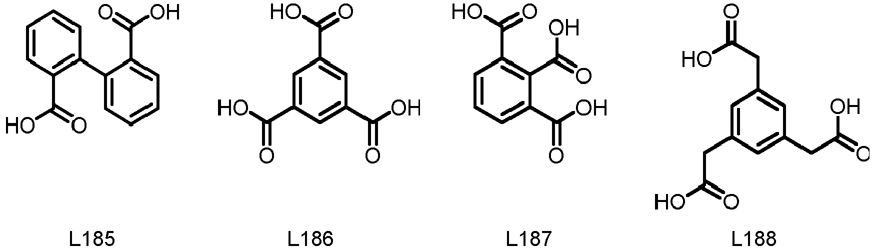

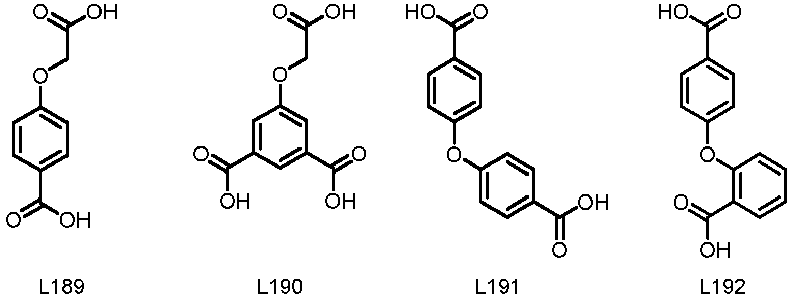

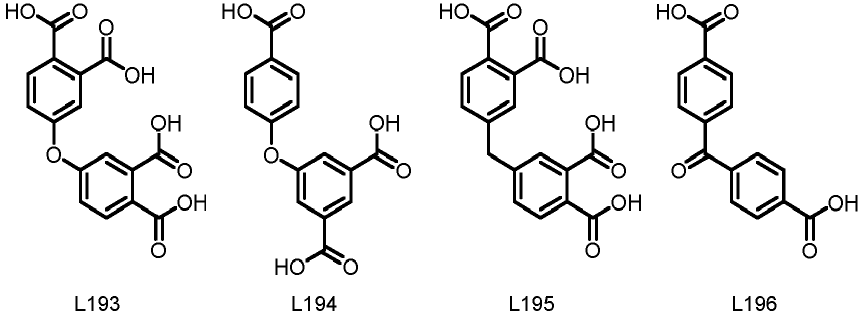

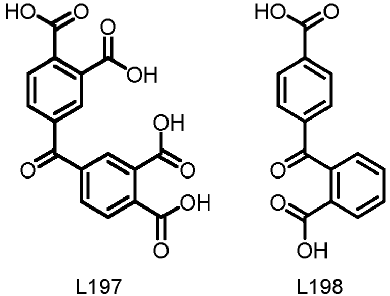

Preferred ligands of this type include glutaric acid (L141) and benzene-1,4-dicarboxylic acid (L156).

Thus the ligands of the metal-organic material are suitably selected from bidentate nitrogen ligands, nitrogen-carboxylate ligands and polycarboxylate ligands.

Preferred bidentate nitrogen ligands are selected from compounds L1 to L68 and especially compounds L1 to L5.

Preferred nitrogen-carboxylate ligands are selected from the compounds having the structures L69 to L128, and especially benzotriazole-5-carboxylic acid (L128) and 2,4-pyridinedicarboxylic acid (L80).

Preferred polycarboxylate ligands are selected from the compounds having the structures L129 to L198 and especially glutaric acid (L141) and benzene-1,4-dicarboxylic acid (L156).

Preferably the metal-organic material used in the present invention include one or more ligands selected from 4,4'-bipyridine (L1), 1,2-di(pyridine-4-yl)-ethene (L5), glutaric acid (L141), benzotriazole-5-carboxylic acid (L128), 2,4-pyridinedicarboxylic acid (L80) and benzene-1,4-dicarboxylic acid (L156).

The metal-organic material suitably comprises metal species and ligands. It may further comprise one or more anions.

Thus in some embodiments the metal-organic material comprises metal species, ligands and anions.

The anions may be coordinated to the metal species (as ligands) or may be incorporated elsewhere in the lattice.

Any suitable anions may be included. Suitable anions will be known to the person skilled in the art and include, for example, hydroxide, halide, carboxylate (including dicarboxylate), nitrate, nitrite, sulfate, sulfite, phosphate, phosphite, borate, oxide, fluro oxyanion, triflate, complex oxyanion, chlorate, bromate, iodate, nitride, tetrafluoroborate, hexafluorophosphate, cyanate and isocyanate.

Suitably the anion is selected from tetrafluoroborate (BF₄⁻), nitrate (NO₃⁻), triflate (CF₃SO₃⁻) and glutarate (⁻OOC(CH₂)₃COO⁻).

The metal-organic material may optionally comprise in one of its structural forms one or more solvent moieties. The solvent moiety may be water, an alcohol or other small organic molecule, for example a hydrocarbon compound, an oxygenated hydrocarbon or a halogenated carbon.

Preferred solvent moieties include water, methanol, ethanol and *α*,*α*,*α*-trifluorotoluene.

Suitably the solvent species may form a coordination bond such as a coordinate covalent bond with the metal species or may be incorporated elsewhere in the lattice.

It will be appreciated by the skilled person that solvent molecules may be present in the crystal structure of the metal-organic material as a result of its preparation process. However the active material used to capture water preferably does not contain any solvent molecules within its crystal structure.

The metal-organic material may be a porous metal-organic framework material comprising pores which have a hydrophobic pore window and a hydrophilic internal pore surface, the hydrophilic internal pore surface being able to capture water, suitably from air.

Hydrophobic atoms have absolute value of δ charge close to 0, while hydrophilic atoms have large absolute value of δ charge. Examples of hydrophobic atoms are H and C atoms in aliphatic or aromatic hydrocarbons. Examples of hydrophilic moieties are -OH, -NH₂ groups.

Pore shapes of porous materials are generally complex and cannot be fitted to simple geometric shapes (e.g. cube, sphere). One of the possible approximations to describe the pore shapes is to use sizes of the spheres that could be inscribed into the pores.

The porous metal-organic framework materials suitable for use herein are preferably microporous materials. Microporous materials have pore diameters of less than 2 nm. Preferably the porous metal-organic framework materials have a pore diameter of less than 10 Å, more preferably less than 8 Å, for example less than 7.5 Å.

The porous metal-organic framework materials for use herein suitably comprise metal species and ligands as previously described.

Suitably the porous metal-organic framework materials comprise a metal species and one or more ligands.

Preferably the metal species is selected from copper, cobalt, nickel, iron, zinc, cadmium, zirconium, magnesium, calcium and aluminium.

More preferably the metal species is selected from Cu²⁺, Co²⁺, Ni²⁺, Fe²⁺, Fe³⁺, Zn²⁺, Cd²⁺, Zr⁴⁺, Mg²⁺, Ca²⁺ and Al³⁺.

Preferably the metal species for the porous metal-organic framework material is selected from transition metals and magnesium.

Most preferably the metal species for the porous metal-organic framework material is selected from copper, cobalt, zirconium, zinc and magnesium.

Ligands useful for forming the porous metal-organic framework materials useful in the present invention preferably have one or more nitrogen donor atoms and/or one or more carboxylic acid (COOH) groups.

In some embodiments the porous metal-organic framework materials comprise two or more types of ligand.

Preferably the porous metal-organic framework materials include at least one ligand including a carboxylic acid residue.

In some preferred embodiments the porous metal-organic framework material includes a ligand including a nitrogen donor atom and a ligand including a COOH group. The nitrogen donor atom and the COOH group may be part of the same ligand or they may be provided by two different ligands.

The ligands of the porous metal-organic framework material are suitably selected from bidentate nitrogen ligands, nitrogen-carboxylate ligands and polycarboxylate ligands.

Preferred bidentate nitrogen ligands are selected from compounds L1 to L68 and especially compounds L1 to L5.

Preferred nitrogen-carboxylate ligands are selected from the compounds having the structures L69 to L128, and especially benzotriazole-5-carboxylic acid (L128) and 2,4-pyridinedicarboxylic acid (L80).

Preferred polycarboxylate ligands are selected from the compounds having the structures L129 to L198 and especially glutaric acid (L141) and benzene-1,4-dicarboxylic acid (L156).

Preferably the porous metal-organic framework materials used in the present invention include one or more ligands selected from 4,4'-bipyridine (L1), 1,2-di(pyridine-4-yl)-ethene (L5), glutaric acid (L141), benzotriazole-5-carboxylic acid (L128), 2,4-pyridinedicarboxylic acid (L80) and benzene-1,4-dicarboxylic acid (L156).

Preferably the porous metal-organic framework material comprises a metal species selected from copper, zirconium, magnesium and cobalt and one or more ligands selected from 4,4'-bipyridine (L1), 1,2-di(pyridine-4-yl)-ethene (L5), glutaric acid (L141), benzotriazole-5-carboxylic acid (L128), benzene-1,4-dicarboxylic acid (L156) and 2,4-pyridinedicarboxylic acid (L80).

In some embodiments the porous metal-organic framework material comprises a metal species selected from copper and cobalt and one or more ligands selected from 4,4'-bipyridine (L1), 1,2-di(pyridine-4-yl)-ethene (L5), glutaric acid (L141), benzotriazole-5-carboxylic acid (L128) and 2,4-pyridinedicarboxylic acid (L80).

In preferred embodiments the metal-organic material comprises a metal species selected from copper, cobalt, nickel, iron, zinc, cadmium, zirconium, magnesium, calcium and aluminium, a ligand selected from compounds L1 to L5, L80, L128, L141 and L156 and an anion selected from BF₄⁻, NO₃⁻, CF₃SO₃⁻ and glutarate.

In some embodiments the metal-organic material comprises a metal species selected from copper, cobalt and nickel and a bidentate nitrogen ligand selected from compounds L1 to L4.

In some embodiments metal-organic material comprises a metal species selected from copper and cobalt and one or more ligands selected from 4,4'-bipyridine (L1), 1,2-di(pyridine-4-yl)-ethene (L5), glutaric acid (L141), benzotriazole-5-carboxylic acid (L128) and 2,4-pyridinedicarboxylic acid (L80).

In some embodiments, the metal-organic material has the formula Mₓ(A)_{y}(L¹)_{z}, wherein M is a metal species as described above and wherein L¹ is a ligand as defined above; A is an anion as defined above or an anionic form of ligands L69 to L128 or L129 to L198; and wherein x is an integer from 1 to 3, y is an integer from 1 to 3 and z is an integer from 1 to 3. Suitably L¹ is selected from L1 to L5, L80, L128, L141 and L156. Suitably A is selected from BF₄⁻, NO₃⁻, CF₃SO₃⁻ and glutarate. Suitably M is selected from copper or cobalt. Suitably the metal-organic material has the formula Cu₂(A)₂(L¹).

In one especially preferred embodiment the metal-organic material comprises Cu²⁺, 4,4'-bipyridine (L1) and glutarate. Water may be present in some crystal forms. This compound may be referred to herein as [Cu₂(glutarate)₂(4,4'-bipyridine)] or ROS-037. A method of preparing this material, its crystal structure and its properties are described in the Examples.

In one embodiment the porous metal-organic framework material comprises Cu²⁺, 1,2-di(pyridine-4-yl)-ethene and glutarate. Water may be present in some crystal forms. This compound may be referred to herein as [Cu₂(glutarate)₂(1,2-di(pyridine-4-yl)-ethene)] or AMK-059.

In one embodiment the porous metal-organic framework material comprises Co²⁺, 2,4-pyridinedicarboxylic acid and hydroxide. Water may be present in some crystal forms. This compound may be referred to herein as [Co₃(µ₃-OH)₂(2,4-pyridinedicarboxylate)₂] or Co-CUK-1.

In one embodiment the porous metal-organic framework material comprises Mg²⁺, 2,4-pyridinedicarboxylic acid and hydroxide. Water may be present in some crystal forms. This compound may be referred to herein as [Mg₃(µ₃-OH)₂(2,4-pyridinedicarboxylate)₂] or Mg-CUK-1.

In one embodiment the porous metal-organic framework material comprises Co²⁺, benzotriazole-5-carboxylic acid (H₂btca) and hydroxide. Water may be present in some crystal forms. This compound may be referred to herein as [Co₃(µ₃-OH)₂(benzotriazolate-5-carboxylate)₂].

In one embodiment the porous metal-organic framework material comprises Zr⁴⁺, benzene-1,4-dicarboxylic acid and hydroxide. Water may be present in some crystal forms. This compound may be referred to herein as [Zr₁₂O₈(µ₃-OH)₈(µ₂-OH)₆(benzene-1 4-dicarboxylate)₉] or hcp-UiO-66.

Suitably the porous metal-organic framework material is selected from [Cu₂(glutarate)₂(4,4'-bipyridine)], [Cu₂(glutarate)₂(1,2-di(pyridine-4-yl)-ethene)], [Cο₃(µ₃-OPH)₂(2,4-pyridinedicarboxylate)₂], [Mg₃(µ₃-OH)₂(2,4-pyridinedicarboxylate)₂], [Cο₃(µ₃-OH)₂(benzotriazolate-5-carboxylate)₂] and [Zr₁₂O₈(µ₃-OPH)₈(µ₂-OH)₆(benzene-1,4-dicarboxylate)₉].

In some embodiments the sorbent pellet may comprise two or more sorbent materials. In such embodiments any reference to the sorbent material includes mixtures.

The sorbent material of the present invention suitably has fast kinetics of adsorption and/or absorption.

Suitably the sorbent material reaches at least 50% of its sorbent maximum capacity within 15 minutes under ambient conditions of temperature and humidity (27 °C, 1 atm). Suitably the sorbent material reaches at least 80%, suitably 90%, of its maximum sorbent capacity within 30 minutes under ambient conditions of temperature and humidity. Suitably the sorbent material reaches its sorbent capacity within 40 minutes under ambient conditions of temperature and humidity.

Suitably the sorbent material reaches at least 50% of its sorbent maximum capacity within 5 minutes under ambient conditions of temperature and humidity (27 °C, 1 atm). Suitably the sorbent material reaches at least 80%, suitably 90%, of its maximum sorbent capacity within 10 minutes under ambient conditions of temperature and humidity. Suitably the sorbent material reaches its sorbent capacity within 10 minutes under ambient conditions of temperature and humidity.

Suitably the sorbent material has a water sorption capacity of at least 1 wt%, preferably at least 3 wt%, preferably at least 5 wt%, for example at least 6 wt% or at least 7 wt%. In some embodiments the sorbent material may have a water sorption capacity of greater than 8 wt%, for example at least 9 wt% or at least 10 wt%. By water sorption capacity we mean to refer to the weight of water a sorbent material is able to adsorb and/or absorb as a fraction of its own weight.

An intrinsic Dynamic Vapor Sorption (DVS) instrument is used by those skilled in the art to generate water sorption data (reported as %wt.) on porous and non-porous materials.

The sorbent materials of the present invention are able to desorb the molecules held within their pores.

Suitably desorption occurs when the sorbent material is subjected to a stimulus, for example a change in humidity or a change in temperature.

Desorption may occur on application of external energy. In some preferred embodiments desorption occurs upon a reduction in humidity and/or an increase in temperature.

The sorbent material of the present invention suitably has fast kinetics of desorption.

Suitably the sorbent material desorbs at least 120 cm³ water vapour/cm³ material when subjected to a stimulus, for example a change in temperature or change in humidity. Suitably the sorbent material desorbs at least 130 cm³ water vapour/cm³ material, for example at least 140 cm³ water vapour/cm³ material when subjected to a stimulus. Suitably the sorbent material desorbs at least 150 cm³ water vapour/cm³ material when subjected to a stimulus.

Suitably the sorbent material of the present invention desorbs at least 20% of the sorbed water within 5 minutes under ambient conditions of temperature and humidity (27°C, 1 atm). Suitably the sorbent material desorbs at least 30%, for example at least 40%, of the sorbed water within 10 minutes under ambient conditions of temperature and humidity. Suitably the sorbent material desorbs at least 50% of the sorbed water within 1 hour under ambient conditions of temperature of humidity.

### The sorbent pellet

The first aspect of the present invention provides a sorbent pellet comprising a sorbent material.

Suitably the pelletisation of the sorbent material does not adversely affect the kinetics of adsorption and/or absorption and the kinetics of desorption.

Suitably the sorbent properties of the sorbent pellet (such as kinetics of sorption and desorption, working capacity or loading time) are substantially the same as the sorbent material as synthesised, for example in powder form. In some embodiments, the sorbent pellet may exhibit some reduction in sorbent properties due to the pellet formation, for example up to a 20% reduction in a given sorbent property, suitably up to a 10% reduction, suitably up to a 5% reduction.

Suitably the sorbent pellets are solid, stable three-dimensional shapes. The sorbent pellets may also be referred to as shaped bodies, particles, granules or tablets.

Suitably the sorbent pellets retain their shape under normal use. The sorbent pellets suitably do not conglomerate and remain as distinct pellets during use. Suitably the sorbent pellets do not decompose under normal use, for example under conditions of temperature and pressure that are commonly used for gas separation and/or capture processes.

The pellets can be characterised according to their three-dimensional shape. Suitable three-dimensional shapes include cylinders, spheres, cubes, droplets, discs, plates and square and hexagonal plates.

Typical methods used to obtain pellets or shaped bodies of adsorbent materials involve drop casting, pressing, sintering, extrusion or granulation. These methods may produce shaped bodies such as spheres, cylinders, granules, tablets etc. Such methods will be known to those skilled in the art. The person skilled in the art will be able to select the most appropriate method for the sorbent material and intended application.

Suitably the sorbent pellet has a largest dimension of at least 0.5 mm, suitably at least 0.8 mm or at least 1 mm. In some embodiments, the sorbent pellet has a largest dimension of at least 5 mm or at least 10 mm. Suitably the sorbent pellet has a largest dimension of up to 100 mm, suitably up to 50 mm or up to 20 mm. The largest dimension may be the height, length, width or diameter etc. as defined based on the three-dimensional shape of the sorbent pellet. For example, the length of the pellet may be the largest dimension in cube-shaped pellets and the diameter may be the largest dimension in disc-shaped pellets.

Suitably the sorbent pellet has a largest dimension of from 0.5 mm to 10 cm. In some embodiments, the sorbent pellet has a largest dimension of from 0.5 mm to 5 mm. In some embodiments, the sorbent pellet has a largest dimension of from 1 cm to 5 cm.

The size of the sorbent pellet is suitably selected according to the kinetics of the sorbent material, the density of the sorbent material and/or the application in which the sorbent pellet is intended to be used. Sorbent materials with faster kinetics of sorption may suitably be made into larger pellets.

Suitably the sorbent material is present in the sorbent pellet as the major component of the sorbent pellet. In some embodiments the sorbent pellet consists of a sorbent material i.e. the sorbent pellet comprises 100 wt% sorbent material.

In some embodiments, additives are included, for example a binder.

In some embodiments the sorbent pellet comprises a binder. The binder may suitably be an organic binder or an inorganic binder.

Suitable organic binders include polymeric compounds and resins. Suitably the organic binder may be selected from cellulose, methyl cellulose, polyethylene glycol, poly(vinyl) polymers and derivatives. Suitably the organic binder may be selected from one or more of polyvinylalcohol, polyvinylpyrrolidone, polyvinylactetate, polyvinylbutyral and acrylic acid-derived polymers and derivatives. The organic binder is suitably soluble in water or a polar organic solvent.

Suitably inorganic binders include metallic and/or ionic compounds, for example bentonite, kaolinite, glass and cement.

The sorbent pellet may suitably comprise from 1 wt% binder, for example from 2 wt% binder or from 3% binder. The sorbent pellet may suitably comprise up to 50 wt% binder, for example up to 30 wt% binder, up to 20 wt% binder, up to 10 wt% binder or up to 5 wt% binder. Suitably the sorbent pellet comprises from 1 wt% to 30 wt% binder, for example from 2 wt% binder to 20 wt% binder or from 2 to 15 wt% binder.

Suitably the sorbent pellet comprises more than 85 wt%, for example more than 90 wt% or more than 95% sorbent material.

In some embodiments, the sorbent pellet consists essentially of the sorbent material and the binder. In some embodiments, the sorbent pellet consists of the sorbent material and the binder.

In some embodiments the sorbent pellet comprises a coating. Suitably the coating comprises a polymer, for example an acrylic polymer.

### Method of producing pellets of sorbent material

According to a second aspect of the present invention, there is provided a method of producing a sorbent pellet comprising a sorbent material having a unit cell density of at least 0.8 g/cm³, comprising the step of shaping the sorbent material to form a pellet.

Suitable shaping methods are as described above. Suitably the step of shaping the sorbent material to form the pellet is carried out under pressure, suitably under a pressure sufficient to force together the sorbent material into the desired shape of pellet and for the pellet to retain its shape and structural integrity once the pressure is released. Suitably the step of shaping is carried out in a suitable pellet forming apparatus, for example a pellet die. In some embodiments the sorbent material is shaped to form a pellet under a pressure of from 1,000 kg/cm² to 2,000 kg/cm². In some embodiments, for example in an industrial process for the production of a plurality of sorbent pellets, the sorbent material may be shaped under a pressure above 2,000 kg/cm².

The sorbent material may suitably be compressed under said pressure for up to 4 minutes, for example up to 3 minutes or up to 2 minutes. The sorbent powder may suitably be compressed for less than 1 minute, for example in an industrial process for the production of a plurality of sorbent pellets.

Suitably the sorbent pellet and the sorbent material are as described in relation to the first aspect.

In some embodiments the method comprises a step of admixing the sorbent material and a binder to provide a sorbent-binder mixture. This step is suitably before the step of shaping the sorbent material to form the pellet.

Therefore in one embodiment there is provided a method of producing a sorbent pellet comprising a sorbent material having a unit cell density of at least 0.8 g/cm³, comprising the steps of:
a) admixing the sorbent material and a binder to form a sorbent-binder mixture; and
b) shaping the sorbent-binder mixture to form a pellet.

Suitably the binder is as described in relation to the first aspect. In some embodiments the sorbent-binder mixture is a slurry.

In some embodiments step a) also comprises adding a solvent to the sorbent material and/or the binder. Suitably such a solvent is able to wet the sorbent material but does not affect its molecular structure and/or micro/macro structure.

The solvent may be a polar organic solvent selected from methanol, ethanol, propanol, butanol, butyraldehyde, formaldehyde, acetic acid, formic acid, ethylenediamine, diethylenetriamine, dimethylformamide, dimethylacetamide, dimethylsulfoxide, ethylene glycol, benzyl alcohol, acetonitrile or mixtures thereof.

In some embodiments the solvent is a mixture of a polar organic solvent and water, for example an alcohol and water. In some embodiments the solvent is water. Alternatively a polar organic solvent, for example an alcohol, and water may be mixed separately with either the sorbent material or the binder, and then combined with each other before shaping.

Suitably the method of the second aspect is carried out at ambient temperature. By "ambient temperature" we mean to refer to room temperature, for example approximately 20°C.

Suitably the method of the second aspect comprises a step c) of curing or drying the shaped sorbent-binder mixture, suitably at an elevated temperature. For example, step c) may be carried out at a temperature of at least 50°C, at least 80°C, at least 100°C or at 120°C. Step c) may be carried out at a temperature of up to 380°C, suitably up to 350°C, suitably up to 300°C or up to 250°C.

Step c) may be carried out for at least 5 minutes, at least 10 minutes or at least 30 minutes. Step c) may be carried out for up to 12 hours, suitably up to 4 hours or up to 1 hour

### Cartridge for a sorbent rotor

According to a third aspect of the present invention, there is provided a cartridge for a sorbent rotor, the cartridge having an enclosure for sorbent media, wherein the enclosure comprises a plurality of pellets of sorbent material.

Suitably the sorbent material and sorbent pellets are as described in relation to the first and second aspects.

The cartridge of the third aspect comprises an enclosure for sorbent media. The enclosure may suitably have an annular shape. The enclosure suitably comprises a through-hole to receive a shaft about which the rotor is able to rotate, in a sorbent rotor device.

The enclosure suitably comprises solid sides to hold the plurality of pellets of sorbent material.

The enclosure suitably comprises a top and a bottom mesh. Suitably at least one of the top or bottom mesh is openable to allow the pellets to be loaded into the cartridge. Suitably the top and bottom mesh comprise a plurality of openings to allow fluid, for example air, to flow through. Suitably the openings are smaller than the size of the pellets of sorbent material, to prevent the pellets from passing through the top or bottom mesh.

Suitably the cartridge of the present invention is replaceable on current desiccant rotor devices. This offers a significant advantage as it is not necessary to replace existing equipment to make use of the present invention.

In some embodiments the plurality of pellets of sorbent material have substantially the same size. Suitably at least 90 wt% of the plurality of pellets of sorbent material have a size within 5% of the mean size of the plurality of pellets, suitably at least 95 wt% by weight of the plurality of pellets have this size.

In some embodiments, the plurality of pellets of sorbent material comprises a first plurality of pellets of sorbent material and a second plurality of pellets of sorbent material; wherein the pellets of the first plurality of pellets of sorbent material are larger in size than the pellets of the second plurality of pellets of sorbent material. In such embodiments the ratio of the first plurality of pellets to the second plurality of pellets may be altered to achieve a desired packing volume or void fraction.

The plurality of pellets sorbent material suitably occupies at least 50% of the volume of the enclosure. In some embodiments the plurality of pellets of sorbent material occupies at least 60% by volume of the enclosure, suitably at least 65% by volume. In some embodiments the plurality of sorbent material occupies at least 70% by volume, for example at least 80% by volume or at least 90% by volume of the enclosure.

Suitably the use of at least a first plurality of pellets of sorbent material and a second plurality of pellets of sorbent material increases the occupation by volume of the enclosure when compared to the use of the first plurality of pellets and/or the second plurality of pellets alone.

Suitably the cartridge of this third aspect has a size, shape and configuration which allows it to be used on known sorbent rotor devices, in place of known cartridges which comprise a sorbent material arranged on a honeycomb or corrugated substrate. The cartridge of this third aspect may therefore be used as a replacement for currently used cartridges on known sorbent rotor devices. Therefore the cartridge of this third aspect may suitably provide the advantageous sorbent performance discussed herein without a user having to invest in new or different sorbent rotor devices.

### Sorbent rotor device

According to a fourth aspect of the present invention, there is provided a sorbent rotor device for capturing water from a liquid or gaseous composition comprising water, the device comprising a cartridge according to the third aspect.

In the sorbent rotor device, the cartridge, and therefore the sorbent material contained within it, are movable between a first position and a second position. The first position may be a sorption position wherein water can be sorbed into the sorbent material and the second position may be a desorption position wherein water can be desorbed from the sorbent material.

Suitably the device comprises a motor adapted to rotate the cartridge about its central axis, between the first and second position.

Suitably the cartridge is adapted to allow the liquid or gaseous composition comprising water to flow across or through the cartridge.

Suitable sorbent rotor devices are known in the art. For example, the sorbent rotor device may be configured to remove water vapour from an incoming stream of air. Therefore the sorbent rotor device may be configured for dehumidification. Alternatively, the sorbent rotor device may be configured to remove water from an aqueous composition, for example seawater, and may therefore be configured for a method of desalination or water purification.

### Method of capturing water

According to a fifth aspect of the present invention, there is provided a method of capturing water from a composition comprising water and/or water vapour, the method comprising:
(a) providing a plurality of pellets of sorbent material; and
(b) contacting the plurality of pellets of sorbent material with the composition comprising water and/or water vapour to sorb water into the pellets of sorbent material;
wherein the sorbent material has a unit cell density of at least 0.8 g/cm³.

The pellets of sorbent material used in the method of this fifth aspect may have any of the suitable features and advantages described in relation to the first aspect.

The method of this fifth aspect may be carried out using a cartridge for a sorbent rotor device according to the third aspect of the present invention.

The method of this fifth aspect may be carried out using a sorbent rotor device according to the fourth aspect, the device comprising a cartridge according to the third aspect. Suitable sorbent rotor devices for use with the cartridge and sorbent pellets of the present invention are known in the art.

The liquid or gaseous composition comprising water is suitably a complex composition comprising water and one or more further components.

Suitably the method of this fifth aspect comprises, following step (b), the steps of:
(c) desorbing the water from the pellets of sorbent material; and
(d) optionally collecting the desorbed water.

Suitably in step (b) the pellets of sorbent material are in a sorption position. Suitably step (c) involves moving the pellets of sorbent material to a desorption position. Suitably step (c) involves applying a stimulus to the pellets of sorbent material to effect desorption of the water.

Suitably the method is carried out with the pellets of sorbent material in a sorbent rotor device which rotates in use so that a first portion of the pellets of sorbent material are in the sorption position and are sorbing water whilst a second portion of the pellets of sorbent material are in the desorption position and are desorbing water for collection.

In some embodiments, the method of this fifth aspect is a method of capturing water from a gaseous composition comprising water vapour. Therefore in such embodiments, the method of this fifth aspect is a dehumidification method. In such embodiments, step (b) involves contacting the plurality of pellets of sorbent material with a gaseous composition comprising water vapour to sorb water into the pellets of sorbent material and allow the remaining gaseous composition (comprising a reduced amount of water vapour) to pass through the pellets of sorbent material. The gaseous composition with reduced water vapour content may be collected for later use or may pass into a space in which the air is being dehumidified by the method. In such embodiments, step (d) may involve collecting the desorbed water for later use or disposal.

In some embodiments, the method of this fifth aspect is a method of capturing water from a liquid composition comprising water, for example salt water, seawater, brackish water, waste water or contaminated freshwater sources. Therefore in such embodiments, the method of this fifth aspect may be a desalination or a water purification method. In such embodiments, step (b) involves contacting the plurality of pellets of sorbent material with a liquid composition comprising water to sorb water into the pellets of sorbent material and allow the remaining liquid composition (comprising a reduced amount of water vapour) to pass through the pellets of sorbent material. The liquid composition with reduced water content may be collected or disposed of. In such embodiments, step (d) involves collecting the desorbed water for later use.

In embodiments wherein the method is a desalination method, the liquid composition comprising water is an aqueous composition, suitably comprising more than 1,000 ppm of dissolved salts, suitably more than 3,000 ppm dissolved salts or more than 5,000 ppm dissolved salts. Highly salted water may comprise from 10,000 ppm to 35,000 ppm dissolved salts. Sea and ocean water comprise approximately 35,000 ppm dissolved salts. Unless otherwise stated, in this specification, all references to ppm are to parts per million by weight.

Suitably the liquid composition comprising water is highly salted water, for example seawater or ocean water.

Dissolved salt species present in sea and ocean water are well known to the skilled person and include, for example, potassium chloride, magnesium chloride, sodium chloride, calcium sulphate and calcium carbonate. The dissolved salt species are suitably present as dissolved ions. Other species may also be present in the sea or ocean water, for example inorganic carbon, bromide, boron, strontium and fluoride and various dissolved atmospheric gases, for example nitrogen, oxygen, argon and carbon dioxide.

In some embodiments the liquid composition comprising water may comprise waste water or effluent water. This may include any water that has been affected by human use, including water used in industrial processes, in agriculture or in domestic use. Waste water or effluent water may comprise contaminants, for example heavy metals, hydrocarbons, or organic matter.

In embodiments in which the liquid composition comprising water is waste water or effluent water, the present invention may involve a purification process.

According to a sixth aspect of the present invention, there is provided the use of a sorbent material having a unit cell density of at least 0.8 g/cm³ in pellet form to capture water from air.

The sorbent material and pellet form are suitably as described in relation to the first aspect.

In one especially preferred embodiment the sorbent material is [Cu₂(glutarate)₂(4,4'-bipyridine)].

### Examples

In the following examples, powder X-ray diffraction (PXRD) measurements were taken using microcrystalline samples using a PANalytical Empyrean™ diffractometer equipped with a PIXcel3D detector. The variable temperature powder X-ray diffraction (VT-PXRD) measurements were collected using a Panalytical X'Pert diffractometer.

Thermogravimetric analysis (TGA) was carried out under nitrogen using the instrument TA Q50 V20.13 Build 39 and data was collected in the high resolution dynamic mode.

Preliminary evaluation of sorption performance in either adsorption or desorption events of sorbents is conducted by obtaining sorption isotherms. Such isotherms reveal the amount of adsorbate (in this case water vapour) adsorbed and/or desorbed across a range of relative humidities (RHs) at a given temperature. Such isotherms can be obtained using instruments and methods known to those skilled in the art.

Vacuum dynamic vapour sorption (DVS) studies were performed using a Surface Measurement Systems DVS Vacuum, which gravimetrically measures the uptake and loss of vapour. The DVS methods were used for the determination of water vapour sorption isotherms using approximately 15 to 30 mg of sample. Pure water was used as the adsorbate for these measurements and temperature was maintained by enclosing the system in a temperature-controlled incubator.

Unit cell density (or crystal density) was calculated using standard methods known in the art.

### Example 1 - [Cu₂(glutarate)₂(4,4'-bipyridine)](ROS-037)

### Synthesis

3.5 L of water was added to the 5 L reactor and the stirrer was set to 750 rpm. Glutaric acid (243 g, 1.84 mol) was added and allowed to dissolve for 10 minutes. NaOH (147 g, 3.68 mol) was added and the temperature of the reactor was set to 70 °C. *(Note: Reaction can be carried out at room temperature also, however more reaction time is required).* Once a clear solution is obtained, Cu(NO₃)₂·2.5H₂O (427 g, 1.84 mol) was added and allowed to stir for 15 minutes. 4,4'-bypyridyl (144 g, 0.92 mol) was added and the mixture was allowed to stir for 6 hours. Once the reaction was complete, the solution was filtered to obtain the solid product, which was further washed to remove any traces of NaOH and unreacted reactants and air dried. Yield, 481 g, > 98%.

The crystallographic information file (CIF) obtained from the crystallographic analysis of this sample was used to calculate the unit cell density using known techniques and software applications. The unit cell density of this sample was 1.57 g/cm³.

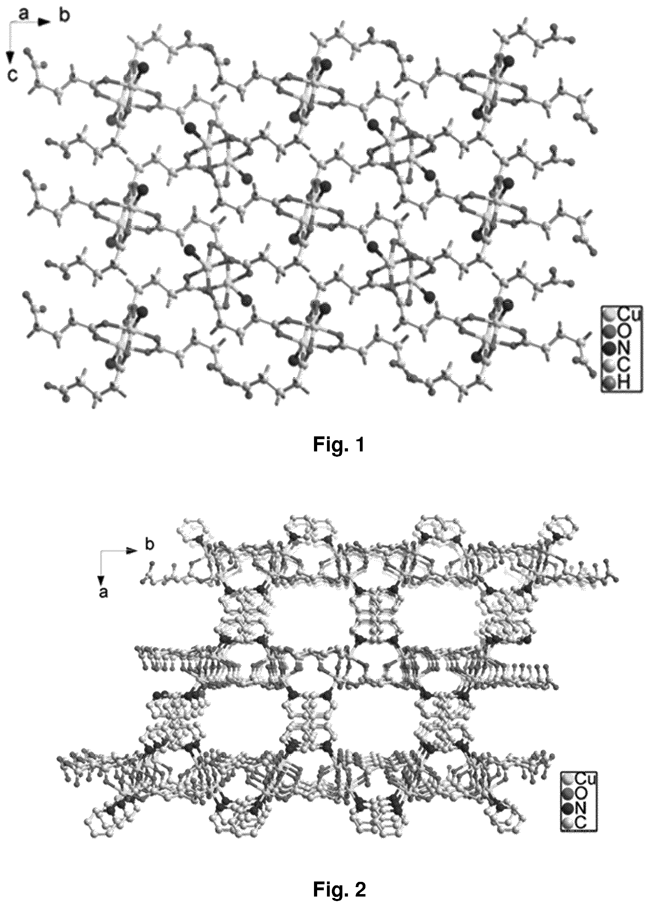

The crystal structure of ROS-037 is shown in Figures 1 and 2.

### Water vapour sorption studies

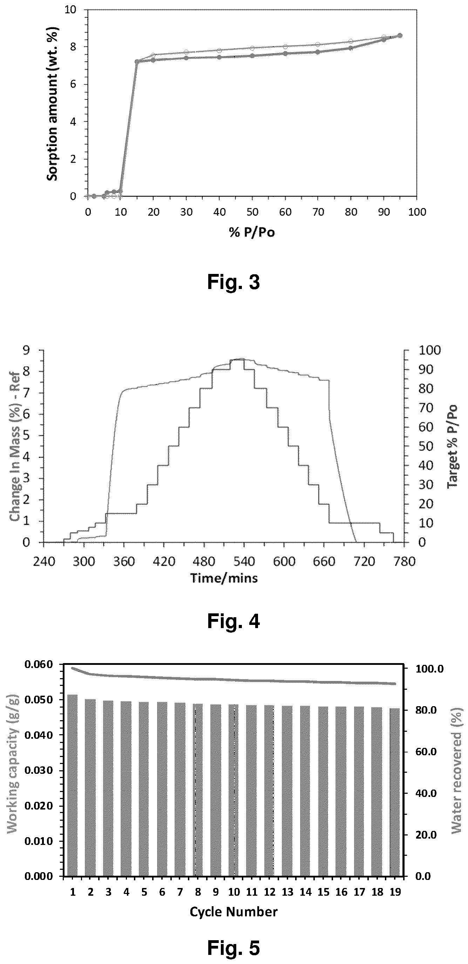

Water vapour sorption studies for [Cu₂(glutarate)₂(4,4'-bipyridine)] were performed at 25°C using the DVS vacuum. The results are shown in Figure 3. The results shows a very narrow hysteresis gap, indicating that water desorption is not restricted.

### Kinetic studies

Water sorption and desorption kinetics for [Cu₂(glutarate)₂(4,4'-bipyridine)] were obtained at 25°C, and are shown in Figure 4. The kinetics data in Figure 4 demonstrate that all steps reach equilibrium over a range of temperatures. The removal of water from the structure does not require any additional heating or vacuum, as evidenced by the mass returning to its original value at 0% relative humidity.

### Reversibility studies

Nineteen cycles of adsorption and desorption at 25°C were performed in total. Reversible switching isotherms are observed and no hysteresis gap is detected, indicating water desorption is not restricted. [Cu₂(glutarate)₂(4,4'-bipyridine)] shows a high working adsorption capacity in the low partial pressure range (≤ 30% P/Po), as demonstrated in Figure 5.

### Pelletisation

A pellet of ROS-037 according to the first aspect of the present invention was formed by pressing with a pellet die under a pressure of 1,500 kg/cm² for 8 minutes. The pellet was disc-shaped with a diameter of approximately 10 mm.

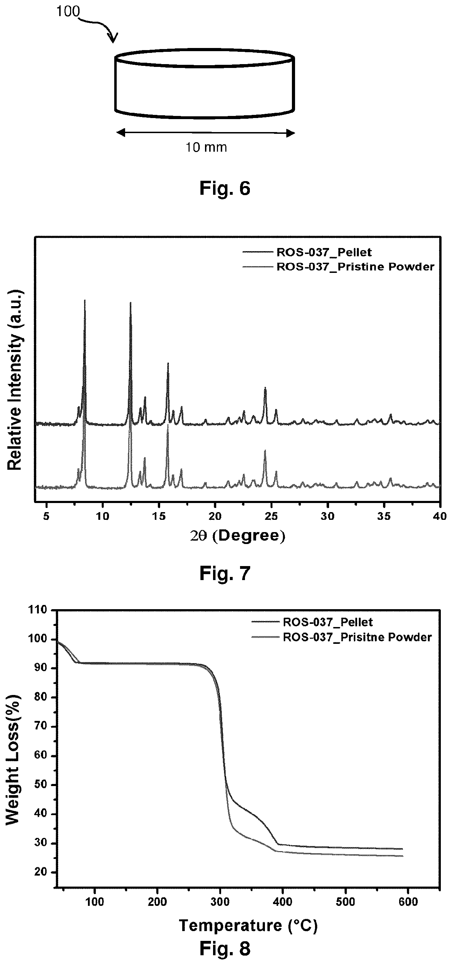

A perspective view of the sorbent pellet (100) is shown in Figure 6. The pellet sustained mechanical stress without disintegrating. The pellet also had the same PXRD trace as the powdered material before pelletisation (see Figure 7 - top line = pellet, bottom line = powder). The pellet form was also found to have a thermal stability comparable to the powder form as shown in Figure 8 (top line on the right hand side = pellet). The pellet and powder forms were also found to have the comparable water uptake (wt %) properties, as shown in Figure 9.

### Examples 2a-f : [Cu₂(glutarate)₂(4,4'-bipyridine)](ROS-037) with binder

In a beaker, a binder (HYCAR® 26410 from Lubrizol) and water were mixed and stirred for 5 minutes at room temperature and pressure. Isopropanol was added to the mixture of binder and water and the mixture stirred for 5 minutes. While stirring continuously, the powder of Example 1 (ROS-037) was added slowly to the liquid solution. The liquid solution was blended for 1 minute to form a slurry. 2 mL of slurry was taken from the beaker using a dropper and then drop cast onto a Teflon petri dish to provide a pellet. The petri dish was placed in an oven for 1 hour at 120°C then removed and transferred to desiccator. The pellet was collected and loaded into a DVS vacuum to measure water sorption at 27 °C. During the process proper care was taken to minimize sample exposure to atmospheric humidity. Example pellets 2a-f were prepared as described above using varying amounts of binder according to Table 1 below.

**Table 1**

| Example | sorbent | sorbent (g) | binder (g) | wt% sorbent : binder |
|---|---|---|---|---|
| 2a | ROS-037 | 1.0 | 0.0 | 100 : 0 |
| 2b | ROS-037 | 0.9 | 0.1 | 90 : 10 |
| 2c | ROS-037 | 0.8 | 0.2 | 80 : 20 |
| 2d | ROS-037 | 0.5 | 0.5 | 50 : 50 |
| 2e | ROS-037 | 0.4 | 0.6 | 40 : 60 |
| 2f | ROS-037 | 0.3 | 0.7 | 30 : 70 |

### Comparative Examples 1-3

The procedure described above was repeated in Comparative Example 1 using only the binder (i.e. with no sorbent material).

The procedure described above was also repeated with silica gel and with metal organic framework material MOF-801 as the sorbent material to prepare 2a, 2b and 3a and 3b, respectively. The silica gel was obtained from a commercial vendor and MOF-801 was obtained by the method described in Fathieh et al., Sci. Adv. 2018, 4, page 6. The amounts of the different reagents used are shown in Table 2 below. Both silica gel and MOF-801 are sorbent materials with a low unit cell density (less than 0.7 g/cm³).

**Table 2**

| Comparative Example | sorbent | sorbent (g) | binder (g) | wt% sorbent : binder |
|---|---|---|---|---|
| 1 | - | - | 3.79 | 0 : 100 |
| 2a | silica | 3.79 | 0 | 100 : 0 |
| 2b | silica | 3.461 | 0.333 | 90 : 10 |
| 3a | MOF-801 | 0.59 | 0 | 100 : 0 |
| 3b | MOF-801 | 0.585 | 0.05 | 90 : 10 |

### Testing of Examples 2a-f and Comparative Example 1-3

### Water vapour sorption studies

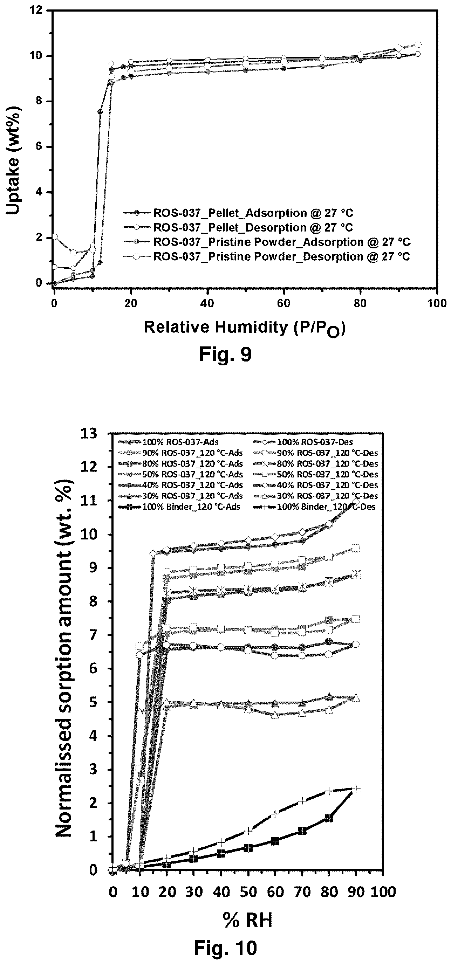

The normalised uptake (wt%), calculated by subtracting the % of water adsorbed by the binder at each relative humidity (RH), were determined using the DVS vacuum for Examples 2a-f and Comparative Examples 1-3. The results are shown in Figures 10-12.

Figure 10 shows that Examples 2a-f perform well in terms of kinetics and water uptake when used with a binder. It was found that the water uptake (wt%) was directly proportional to the weight ratio of the sorbent ROS-037 to the binder.

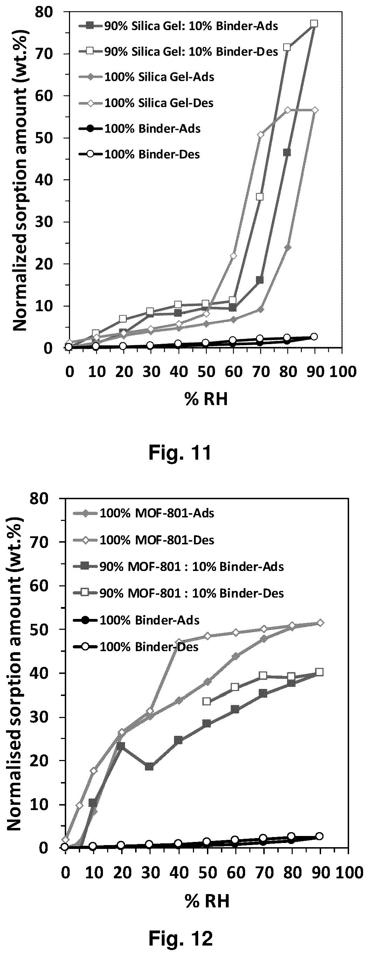

Figure 11 shows that Comparative Examples 2a and 2b sorb more water than Examples 2a-f, but do so only at a higher relative humidity. Also the Comparative Example 2b comprising the binder appeared to perform better than the Comparative Example 2a without the binder.

Figure 12 shows that Comparative Examples 3a and 3b also sorb more water relative to Example 2a-f, but do so more gradually as relative humidity increases. Also, the presence of the binder appeared to have a negative effect on water sorption of Comparative Examples 3b compared to Comparative Example 3a comprising only MOF-801.

### Kinetic studies

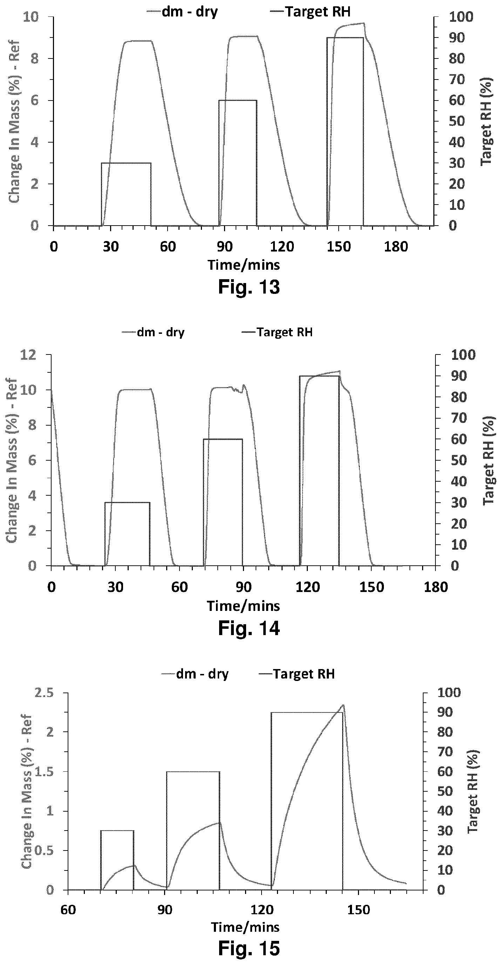

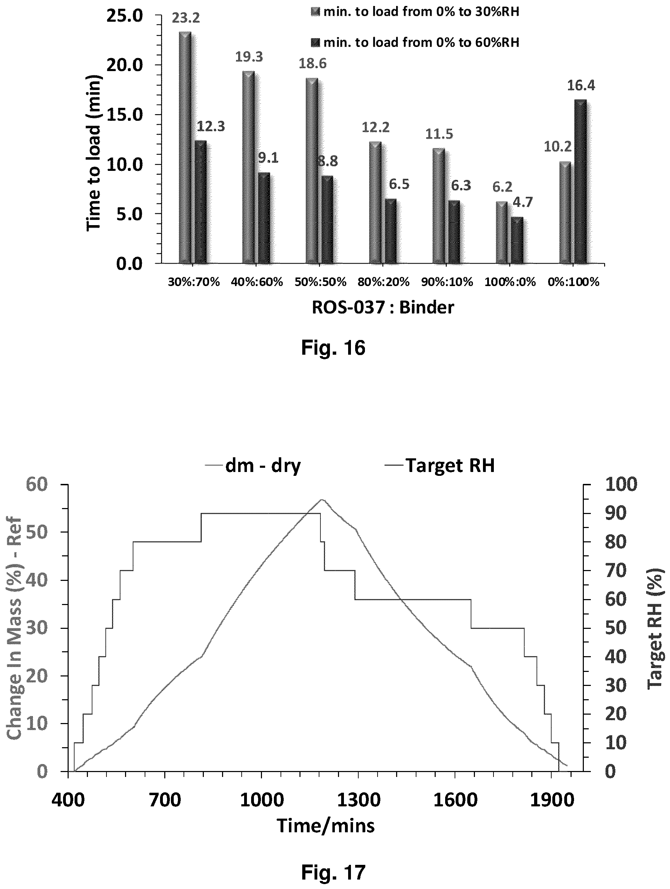

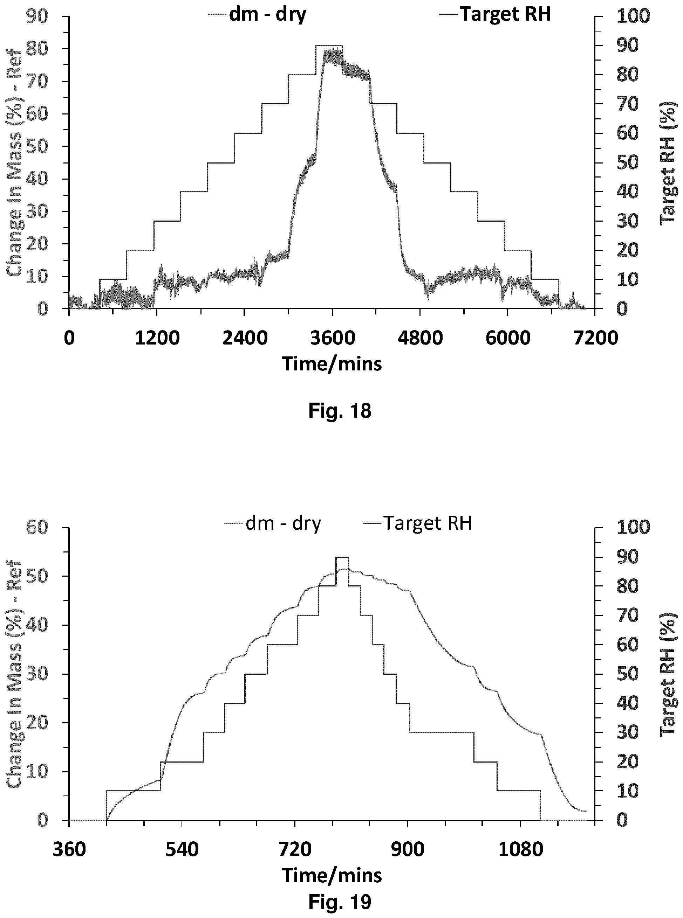

Water sorption and desorption kinetics of Examples 2a-f and Comparative Examples 1, 2a, 2b, 3a and 3b were measured on the DVS Vacuum. Figures 13-15 show the results with Examples 2b (10wt% binder), 2a (0 wt% binder) and Comparative Example 1 (100 wt% binder). Examples 2b and 2a show favourably short loading times. The Comparative Examples 2a, 2b (silica gel), 3a and 3b (MOF-801) showed very slow kinetics (see Figures 17-20), in the case of Comparative Example 2b taking approximately 5 days to collect the isotherm of Figure 18.

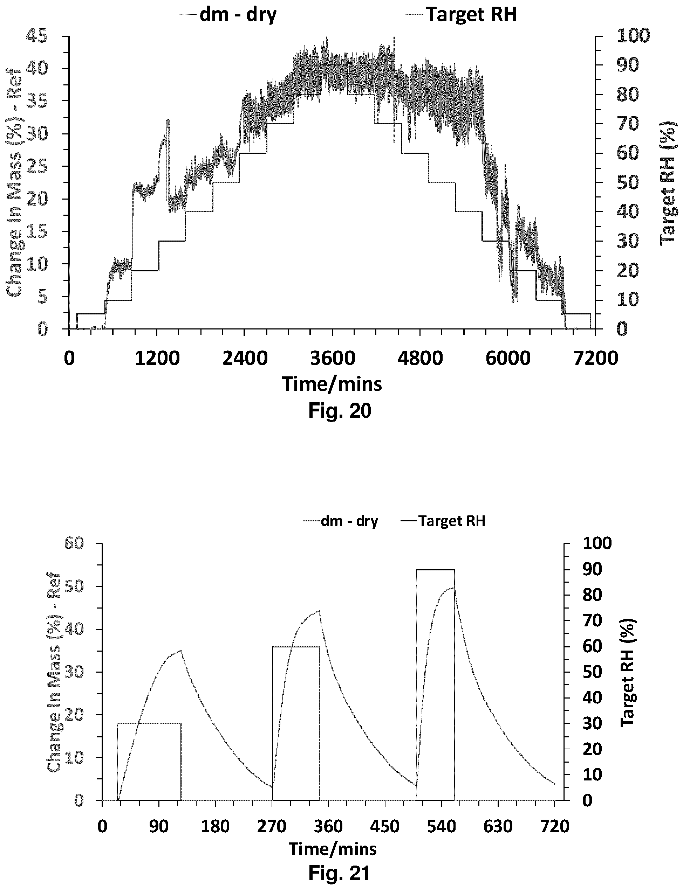

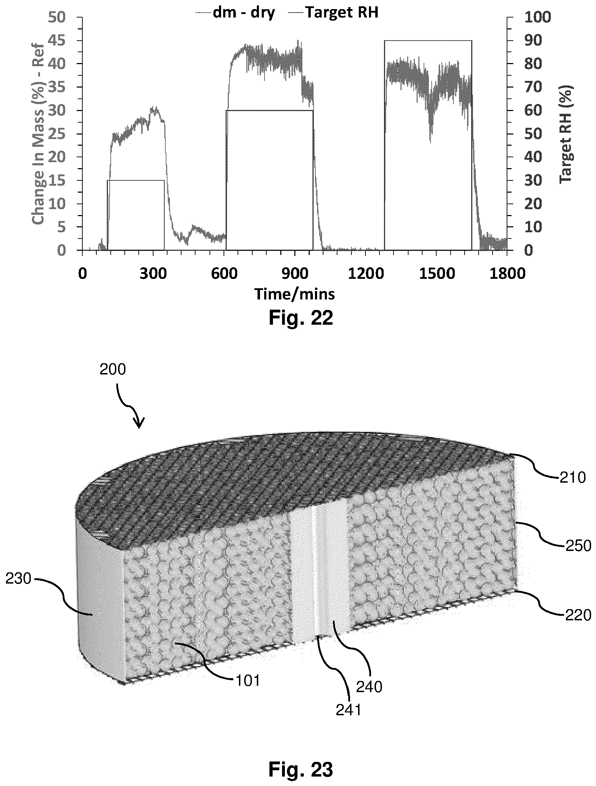

Furthermore, a comparison of the sorption kinetics of Comparative Examples 3a and 3b (see Figures 21 and 22) shows that mixing the MOF-801 sorbent material with a binder adversely effects the sorbent properties of the MOF-801, giving reduced capacity, longer loading times and an erratic sorption graph.

Figure 16 shows a comparison of loading times at 30 and 60% RH for Examples 2a-f and Comparative Example 1. This data shows that loading time decreases when the weight ratio of the ROS-037 sorbent material to binder increases. A comparison of working capacity and loading time data for Examples 2a, 2b and Comparative Example 1 is provided below in Table 3.

**Table 3**

| working capacity loading time (mins) | Example | | |
|---|---|---|---|
| | 2b | 2a | Comp. Ex 1 |
| 0 to 30% RH | 8.85 wt% (11.5 min) | 10.01 wt% (6.2 min) | 0.31 wt% (10.23 min) |
| 0 to 60% RH | 9.08 wt % (6.34 min) | 9.94 wt% (4.7 min) | 0.81 wt% (16.43 min) |
| 0 to 90% RH | 9.70 wt % (5.16 min) | 11.02 wt% (4.7 min) | 2.28 wt% (22.41 min) |

This data demonstrates that sorbent materials having a relatively high unit cell density (i.e. >0.8 g/cm³) can be formed into sorbent pellets which retain their advantageous properties.

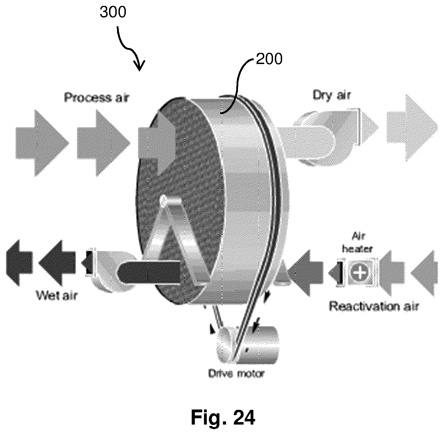

The performance of said pellets in the tests discussed above may allow such pellets to be used in a cartridge for a sorbent rotor device (200) according to the third aspect of the present invention as shown in cross-sectional view in Figure 23, for use in a sorbent rotor device (300) according to the fourth aspect of the present invention as shown in a perspective and schematic view in Figure 24. The cartridge (200) of Figure 23 has an annular shape comprising a storage volume (or enclosure) (250) for receiving sorbent material. The storage volume (250) is defined by cylindrical side wall (230), top mesh (210), bottom mesh (220) and central core (240) which are fastened together to retain a sorbent material placed in the storage volume. A plurality of spherical pellets of sorbent material (101) are loaded into the storage volume (250) of the cartridge to substantially fill the storage volume (250), apart from the inevitable gaps between the spherical pellets (101). Central core (240) comprises a central bore hole (241) to allow the cartridge (200) to be mounted on a shaft of a sorbent rotor device, such as device (300) shown in Figure 24. The sorbent rotor device (300) comprising cartridge (200) having the plurality of sorbent pellets (101), for example formed of ROS-037 and optionally a binder, may operate to capture water from a gaseous composition comprising water vapour (such as humid air). Device (300) achieves this by rotating the cartridge (200) so that the pellets of sorbent material (101) continuously move into and out of a stream of "process air" (i.e. humid air) and a stream or "reactivation air". Whilst in the stream of process air, the sorbent pellets sorb water vapour from said process air and then when the same sorbent pellets have been moved into the stream of reactivation air the sorbed water is desorbed and collected, the sorbent pellets then being ready to move into the stream of process air and sorb further water vapour. This process runs continuously to obtain a continuous stream of dehumidified air. A similar device could be used to sorb water from a liquid composition comprising water and desorb said water for collection, for example in a water purification or desalination method.

In summary, the present invention provides a sorbent pellet comprising a sorbent material. The sorbent pellet is suitable for use in a sorbent rotor device, for example to capture water or water vapour from a gaseous or liquid composition comprising water or water vapour. The sorbent material has a unit cell density of at least 0.8 g/cm³ and may therefore be considered to be a high density sorbent material. A plurality of such sorbent pellets may provide a high capacity media for a sorbent rotor device, which may be particularly effective in dehumidification, desalination or water purification processes. Also provided are a cartridge for a sorbent rotor device, a sorbent rotor device for capturing water from a liquid or gaseous composition comprising water, a method of capturing water from a composition comprising water and/or water vapour, and a use of a sorbent material having a density of at least 0.8 g/cm³ in pellet form to capture water from air.

Although a few preferred embodiments have been shown and described, it will be appreciated by those skilled in the art that various changes and modifications might be made without departing from the scope of the invention, as defined in the appended claims.

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention. Typically, when referring to compositions, a composition consisting essentially of a set of components will comprise less than 5% by weight, typically less than 3% by weight, more typically less than 1% by weight of non-specified components.

The term "consisting of" or "consists of" means including the components specified but excluding addition of other components.

Whenever appropriate, depending upon the context, the use of the term "comprises" or "comprising" may also be taken to encompass or include the meaning "consists essentially of" or "consisting essentially of", and may also be taken to include the meaning "consists of" or "consisting of".

For the avoidance of doubt, wherein amounts of components in a composition are described in wt%, this means the weight percentage of the specified component in relation to the whole composition referred to. For example, "the sorbent pellet comprises from 1 wt% to 30 wt% binder" means that 1 to 30 wt% of the sorbent pellet is provided by binder.

The optional features set out herein may be used either individually or in combination with each other where appropriate and particularly in the combinations as set out in the accompanying claims. The optional features for each aspect or exemplary embodiment of the invention as set out herein are also to be read as applicable to any other aspect or exemplary embodiments of the invention, where appropriate. In other words, the skilled person reading this specification should consider the optional features for each exemplary embodiment of the invention as interchangeable and combinable between different exemplary embodiments.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, and drawings), and/or all of the steps of any method or process so disclosed, may be combined in any combination, except combinations where at least some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, and drawings), or to any novel one, or any novel combination, of the steps of any method or process so disclosed.

## Claims

1. A sorbent pellet comprising a sorbent material, wherein the sorbent material has a unit cell density of at least 0.8 g/cm³.

2. The sorbent pellet according to claim 1, wherein the sorbent material is a metal-organic material comprising metal species and ligands.

3. The sorbent pellet according to claim 2, wherein the metal species is selected from copper, cobalt, nickel, iron, zinc, cadmium, zirconium, magnesium, calcium and aluminium.

4. The sorbent pellet according to claim 2, wherein the ligands are selected from 4,4'-bipyridine (L1), 1,4-bis(4-pyridyl)benzene (L2), 4,4'-(2,5-dimethyl-1,4-phenylene)dipyridine (L3), 1,4-bis(4-pyridyl)biphenyl (L4), 1,2-di(pyridine-4-yl)-ethene (L5), 2,4-pyridinedicarboxylic acid (L80), benzotriazole-5-carboxylic acid (L128), glutaric acid (L141) and benzene-1,4-dicarboxylic acid (L156).

5. The sorbent pellet according to claim 2, wherein the sorbent material is [Cu₂(glutarate)₂(4,4'-bipyridine)].

6. The sorbent pellet according to any preceding claim, wherein the sorbent pellet comprises up to 10 wt% of a binder.

7. The sorbent pellet according to any preceding claim, wherein a largest dimension of the sorbent pellet is from 0.5 mm to 10 cm.

8. A cartridge for a sorbent rotor device, the cartridge having an enclosure for sorbent media, wherein the enclosure comprises a plurality of pellets of sorbent material.

9. The cartridge according to claim 8, wherein the plurality of pellets of sorbent material comprises a first plurality of pellets of sorbent material and a second plurality of pellets of sorbent material; wherein the pellets of the first plurality of pellets of sorbent material are larger in size than the pellets of the second plurality of pellets of sorbent material; preferably wherein the plurality of pellets sorbent material occupies at least 65% of the volume of the enclosure.

10. The cartridge according to any one of claims 8 to 9, wherein the plurality of pellets of sorbent material are pellets according to any one of claims 1 to 7.

11. A sorbent rotor device for capturing water from a liquid or gaseous composition comprising water, the device comprising a cartridge according to any one of claims 8 to 9.

12. A method of capturing water from a composition comprising water and/or water vapour, the method comprising:
(a) providing a plurality of pellets of sorbent material; and
(b) contacting the plurality of pellets of sorbent material with the composition comprising water and/or water vapour to sorb water into the pellets of sorbent material;
wherein the sorbent material has a unit cell density of at least 0.8 g/cm³.

13. A method of producing a sorbent pellet according to any one of claims 1 to 7, the method comprising a step of shaping the sorbent material to form a pellet.

14. Use of a sorbent material having a density of at least 0.8 g/cm³ in pellet form to capture water from air.

15. The use according to claim 14, wherein the sorbent material is [Cu₂(glutarate)₂(4,4'-bipyridine)].
